# EUROPÄISCHE PATENTSCHRIFT

(11) **EP 4 566 851 B1**
(45) Veröffentlichungstag und Bekanntmachung des Hinweises auf die Patenterteilung: **01.07.2026**
(21) Anmeldenummer: 23214946.8
(22) Anmeldetag: 07.12.2023
(51) Int. Cl.: B60H 1/00, B60H 3/06

(54) **GROSSRAUMFAHRZEUG-FAHRGASTKABINE**
LARGE PASSENGER COMPARTMENT VEHICLE CABIN
CABINE DE VÉHICULE DE GRANDE CAPACITÉ

(43) Veröffentlichungstag der Anmeldung: 11.06.2025
(73) Patentinhaber: Deutsches Zentrum für Luft- und Raumfahrt e.V., 53227 Bonn (DE)
(72) Erfinder: Schmeling, Daniel, 37073 Göttingen (DE); Dehne, Tobias, 37073 Göttingen (DE); Volkmann, André, 37073 Göttingen (DE); Schiepel, Daniel, 37073 Göttingen (DE)
(74) Vertreter: REHBERG HÜPPE + PARTNER

(56) Entgegenhaltungen:
- EP-A1- 3 929 086
- WO-A1-2022/082099
- US-A- 2 383 423
- US-B1- 11 672 882

## Beschreibung

### TECHNISCHES GEBIET DER ERFINDUNG

Die Erfindung betrifft eine Großraumfahrzeug-Fahrgastkabine. Vorzugsweise handelt es sich dabei um eine Fahrgastkabine eines Schienenfahrzeugs, eines Luftfahrzeugs, eines Großraumabteils eines Passagierzuges, eines Reisebusses, eines Stadtbusses oder eines "Shared Mobility Vans".

### STAND DER TECHNIK

EP 2 684 591 A1 offenbart eine Luftfiltereinrichtung für eine Fahrerkabine einer Land- und Arbeitsmaschine mit Spritz- oder Spülvorrichtungen für Pflanzenschutz- oder Düngemittel, wobei die Luftfiltereinrichtung mehrere Filterstufen aufweist, um gesundheitsschädliche Gase, unangenehm riechende Gase, Stäube, Dämpfe und Aerosole abzusondern. Die Filtereinrichtung ist hierbei in das Kabinenbelüftungssystem integriert.

DE 10 2005 026 556 A1 offenbart ein Kabinenbelüftungssystem eines Fahrzeugs, bei dem für eine geräuscharme Belüftung ein Abschnitt einer Wandung eines Luftführungskanals aus einem Vließstoff aus PP, PE oder PES besteht.

Unter Würdigung der vorgenannten Druckschriften EP 2 684 591 A1 und DE 10 2005 026 556 A1 beschreibt US 2020/0016959 A1 die Problematik, dass bei derartigen Kabinenbelüftungssystemen die mittels Filtern behandelte Luft lediglich an einer begrenzten Zahl von Stellen der Kabine zugeführt und die Luft wieder aus dieser abgesaugt werden kann. Des Weiteren erfordern diese bekannten Kabinenbelüftungssysteme die Zufuhr von Frischluft im Unterbodenbereich des Fahrzeugs oder im Bereich des Motorraums, womit die Frischluft mit Verunreinigungen beispielsweise infolge von Abrieb des Antriebstranges, der Fahrzeugräder, Bremsstaub beaufschlagt ist. US 2020/0016959 A1 schlägt vor diesem Hintergrund ein flaches Filterelement vor, welches in eine Innenkomponente des Fahrzeugs integriert ist. Das Filterelement hat eine Oberfläche, die in Richtung des Inneren des Fahrzeugs weist. Durch das Filterelement strömende Luft wird aus dem Filterelement dem Innenraum der Fahrzeug-Fahrgastkabine zugeführt. Das Filterelement ist vorzugsweise im Türbereich angeordnet und stellt einen Luftschleier zur Verfügung. Möglich ist auch, dass die Innenkomponente, in die das Filterelement integriert ist, eine Fußmatte oder eine Sonnenblende, eine Verkleidung der Fahrzeug-Fahrgastkabine, eine Türverkleidung, eine Laderaumauskleidung, eine Verkleidung einer Säule, ein Armaturenbrett, ein Sitz oder eine Kopfstütze ist. Das Filterelement kann ein passiver Filter oder ein Adsorptionsfilter sein.

DE 10 2016 212 940 A1 schlägt eine Fahrzeug-Fahrgastkabine vor, bei der die Belüftung des Innenraums mittels eines Kabinenbelüftungssystems unter Überwachung einer Luftqualität mittels Kohlendioxid-Sensoren und Temperatursensoren erfolgt. Zusätzlich finden in dem Innenraum Überwachungskameras Einsatz, um beispielweise Vandalismus zu detektieren. DE 10 2016 212 940 A1 schlägt vor, den Innenraum mittels einer Infrarotkamera zu überwachen, wobei eine Auswertung des Bildes der Infrarotkamera mit einer Ortsauflösung in dem Innenraum erfolgen kann, womit an mehreren Orten auf Grundlage des Bildes der Infrarotkamera mindestens ein Parameter ermittelt werden kann. Neben dem Einsatz dieser Maßnahmen für eine Fahrzeug-Fahrgastkabine können diese auch für einen Konferenzsaal, einen Konzertsaal oder ein Klassenzimmer verwendet werden. Vorzugsweise erfolgt anhand der Auswertung des Bildes der Infrarotkamera die Ermittlung von Temperaturen von Körpern oder Gegenständen in dem Bild. Auf Grundlage der ermittelten Temperatur kann dann eine Steuerung des Volumenstroms des Kabinenbelüftungssystems erfolgen. Als weiterer Parameter kann aus dem Bild der Infrarotkamera die Zahl der anwesenden Personen erfasst werden, die dann ebenfalls zur Steuerung des Volumenstroms des Kabinenbelüftungssystems und/oder zur Ermittlung der erzeugten Menge an Kohlendioxid durch die anwesenden Personen herangezogen werden kann. Die Ermittlung der Parameter und die Steuerung des Kabinenbelüftungssystems kann dabei spezifisch für Zonen der Fahrzeug-Fahrgastkabine erfolgen. Anhand des Bildes der Infrarotkamera kann auch eine Erkennung eines etwaigen Brandes im Innenraum der Fahrzeug-Fahrgastkabine erfolgen.

Grundsätzliche Informationen zur Ausgestaltung von Luftfiltereinheiten, insbesondere zu einsetzbaren Materialien, unterschiedlichen Filterstufen und Dimensionierungen, und zur Integration derartiger Filtereinheiten in Belüftungsanlagen, Ventilationssysteme und Klimaanlagen offenbart EP 1 468 718 B1.

Weiterer Stand der Technik ist aus DE10 2009 058 996 B4 bekannt.

EP 1 829 745 A2 offenbart eine Großraumfahrzeug-Fahrgastkabine eines Reisebusses, Schienenfahrzeugs oder Passierflugzeugs, in dem sich unter der Decke ein Luftkanal in Längsrichtung erstreckt. An der Unterseite des Luftkanals sind modulartige Gepäckablagefächer befestigt. Durch einen konstanten und gerade verlaufenden Querschnitt des Luftkanals sollen Strömungsunterbrechungen, die Ausbildung von Turbulenzen in dem Luftkanal und eine Geräuschentwicklung vermieden werden. Die Gepäckablagefächer können mit zusätzlichen Funktionselementen bestückt sein, die auch eine Luftzuführung umfassen können.

DE 10 2020 121 450 A1 beschreibt ein Luftumwälzsystem, um in einem geschlossenen Raum an vorgegebenen Plätzen befindliche Personen vor einer wechselseitigen Übertragung von Krankheitserregern durch ausgeatmete und von einem Nachbarn wieder eingeatmete Aerosole zu schützen. Vorgeschlagen wird hier, die Luft über eine Ansaugöffnung in einer niedrigen Höhe aus dem Raum abzusaugen und nach einer Filterung über eine Ausblasöffnung in einer größeren Höhe wieder so auszublasen, dass von der Ausblasöffnung die gereinigte Luft über einen vertikalen Luftschleier wieder zu der Ansaugöffnung gelangt. Der Luftschleier trennt dann die an den vorgegebenen Plätzen angeordneten Personen und schützt diese vor einer Übertragung von Krankheitserregern. In dem Luftschleier erfolgt eine Strömung der Luft mit einer Strömungsgeschwindigkeit von mehreren Metern pro Sekunde. Die Filtereinrichtung kann einen HEPA-Filter aufweisen. Möglich ist auch, dass die abgesaugte Luft mit UV-Lift, Ozon oder physikalischem Plasma behandelt wird. Eine Fördereinrichtung kann abhängig von einem an dem jeweiligen Platz gemessenen Geräuschpegel, insbesondere einem Atem-, Sprech-, Sing- oder Hustgeräuschpegel oder abhängig von Messwerten eines physiologischen Parameters der jeweiligen Person an dem jeweiligen Platz (beispielsweise einer Atem- oder Herzfrequenz der Person, wenn diese beispielsweise auf einem Sportgerät sitzt) gesteuert werden.

DE 10 2019 122 963 A1 beschreibt eine Integration einer Kühleinrichtung in einen Boden eines Gepäckfaches eines Flugzeugs. Die Kühleinrichtung gewährleistet eine Kühlung mittels Konvektion und Strahlung. Die Bereitstellung der Kühlleistung erfolgt über einen Kühlmittelkreislauf, der als geschlossener oder als teilweise, temporär oder permanent offener Kühlmittelkreislauf ausgebildet sein kann. Als Kühlmittel kann auch aus der Atmosphäre entnommene Luft eingesetzt sein. Die Kühleinrichtung kann auch einen Wärmetauscher aufweisen, der mit der Außenfläche der Flugzeugkabine gebildet ist. Die Kühlfläche soll möglichst eng benachbart zu einem Fahrgast angeordnet sein, um gezielt eine Kühlung mittels Konvektion und Strahlung für den Kopf des Fahrgasts herbeizuführen.

Weiterer Stand der Technik ist aus DE 10 2009 056 968 B3 bekannt.

Der Fernsehbeitrag
https://www.ardmediathek.de/video/gut-zu-wissen/wie-verteilen-sich-viren-im-zug-oderflieger/br-Fernsehen/
Y3JpZDovL2JyLmRIL3ZpZGVvLzA1N2FmZDg4LTcyNmQtNGE0Yi1hYmIyLTVkNDMyM 2U4OTkyNw
gibt eine Übersicht über die Verbreitung von Aerosolen in Großraumfahrzeug-Fahrgastkabinen. Zur Abhilfe wird hier vorgeschlagen, oberhalb der Köpfe der Fahrgäste über das Kabinenbelüftungssystem die ausgeatmete Luft mit den Aerosolen abzusaugen.

Von der Website
https://delos.com/blog/why-in-cabin-air-quality-on-public-transport-matters/
sind deckenseitige Luftreinigungseinrichtungen für Busse bekannt, während die Webseite
   https://cities-today.com/filtration-system-could-create-personal-air-space-for-publictransport-passengers/
eine Luftfiltereinrichtung beschreibt, die an der Rückenlehne vor einem Fahrgast angebracht ist.

Die nächstliegende Druckschrift EP 3 929 086 A1 offenbart eine Luftreinigungseinrichtung, die benachbart einem erkrankten Fahrgast in einer Fahrgastkabine eines Flugzeugs angeordnet werden soll, um eine Quarantänezone für den erkrankten Fahrgast bereitzustellen. Die Luftreinigungseinrichtung verfügt über mindestens einen Filter (insbesondere einen HEPA-Filter und/oder ein Aktivkohlefilter), ein regeneratives Heizelement, ein Ozon-Umwandlungselement, Absorptionsmaterial und eine desinfizierende UV-Lichtquelle. Die Luftreinigungseinrichtung kann an einer Seitenwand, einem Deckelpanel, unter einem Sitz, auf einem leeren Sitz oder in einem Bodenpanel angeordnet sein kann. Die Luftreinigungseinrichtung verfügt über einen Ventilator, welcher Luft von einer Lufteintrittsöffnung durch die Luftreinigungseinrichtung zu einer Luftaustrittsöffnung fördert. Die Luftreinigungseinrichtung soll feste Partikel wie Staub, Pollen, Bakterien oder Viren oder gasförmige Verunreinigungen aus der Luft entfernen. Ist die Luftreinigungseinrichtung in ein Deckenpanel der Fahrgastkabine integriert, befindet sich dieses oberhalb des Ganges sowie zwischen und oberhalb von den Gepäckablagen auf beiden Seiten des Ganges. Die Lufteintrittsöffnung ist dabei mittig im Deckenbereich über dem Gang angeordnet, während die Luftaustrittsöffnung im Deckenbereich unmittelbar benachbart den Gepäckanlagen angeordnet ist. Aus der Luftaustrittsöffnung strömt die Luft in Richtung und entlang der Seitenflächen der Gepäckablagen und strömt dann entlang dieser Seitenflächen in den Innenraum der Fahrgastkabine, wobei die Luft dann auf das Gesicht des Fahrgastes treffen soll. Eine Steuerung der Luftreinigungseinrichtung kann aus der Pilotenkabine, mittels Steuereinrichtungen der Flugbegleiter, mittels Steuereinrichtungen der Fahrgäste für Unterhaltungsprogramme oder mittels einer Steuereinrichtung an der Luftreinigungseinrichtung selbst erfolgen.

WO 2022/082099 A1 offenbart ein Luftreinigungssystem für eine Flugzeug-Fahrgastkabine, bei der Luft aus der Flugzeug-Fahrgastkabine im Bereich der Seitenwände abgesaugt wird, mittels eines im Bereich der Seitenwände verlaufenden Längskanals nach hinten gefördert wird und nach der Reinigung mittels eines HEPA-Filters mittels eines Gebläses wieder im Heckbereich der Flugzeug-Fahrgastkabine in die Flugzeug-Fahrgastkabine zurückgeführt wird. Ergänzend kann eine Aufbereitung der Luft durch Erzeugung von Ozon und eine Bestrahlung der Luft innerhalb der Flugzeug-Fahrgastkabine mit UV-Licht erfolgen. Im Bodenbereich der Flugzeug-Fahrgastkabine können Luftauslässe für die gereinigte Luft und Lufteinlässe zum Absaugen der Luft aus der Flugzeug-Fahrgastkabine angeordnet sein. Luft kann auch gezielt mittels eines Injektors in Längsrichtung der Flugzeug-Fahrgastkabine ausgestoßen werden, um eine Durchströmung und einen Luftwechsel in der Flugzeug-Fahrgastkabine herbeizuführen. Die von dem HEPA-Filter gereinigte und mittels eines Propellers im Heckbereich der Flugzeug-Fahrgastkabine geförderte Luft kann auch ein hohles und aufklappbares Deckenpanel in Längsrichtung der Flugzeug-Fahrgastkabine durchströmen und dann sukzessive über in Längsrichtung verteilte Luftauslässe in die Flugzeug-Fahrgastkabine einströmen. Das derart durchströmte Deckenpanel ist oberhalb des Ganges zwischen den Gepäckablagefächern der Flugzeug-Fahrgastkabine angeordnet.

### AUFGABE DER ERFINDUNG

Der Erfindung liegt die Aufgabe zugrunde, eine Großraumfahrzeug-Fahrgastkabine vorzuschlagen, welche alternative oder verbesserte Möglichkeiten für die Luftführung und die Reinigung der Luft insbesondere hinsichtlich Aerosolen aufweist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird eine Großraumfahrzeug-Fahrgastkabine vorgeschlagen, die mehrere Sitzreihen aufweist. Die Sitzreihen sind in Richtung einer Längsachse der Großraumfahrzeug-Fahrgastkabine hintereinander angeordnet und erstrecken sich jeweils quer zu dieser Längsachse.

Die Großraumfahrzeug-Fahrgastkabine verfügt über eine Gepäckablage. Hierbei kann es sich um eine offene oder geschlossene Gepäckablage handeln. Die Gepäckablage ist vorzugsweise im oberen Eckbereich des Querschnitts der Großraumfahrzeug-Fahrgastkabine angeordnet. Um lediglich einige die Erfindung nicht beschränkende Beispiele zu nennen, kann es sich bei der Gepäckablage um eine "Hutablage" (die allerdings nicht lediglich zur Ablage von Hüten dient) oder ein Kofferfach handeln.

Die Gepäckablage ist an einer Seitenwand und/oder an einer Decke der Großraumfahrzeug-Fahrgastkabine gehalten. Beispielsweise kann die Seitenwand ein sich in Längsrichtung erstreckendes Befestigungsprofil aufweisen, an dem die Gepäckablage frei auskragend oder mit zusätzlicher Befestigung an der Decke und/oder Stirn- oder Querwänden gehalten ist. Die Gepäckablage ist in vertikaler Richtung zwischen der Decke und den Sitzreihen angeordnet.

Somit befindet sich die Gepäckablage oberhalb eines Fahrgastes, der auf einer Sitzreihe sitzt, wobei die Gepäckablage vorzugsweise unmittelbar oberhalb des äußeren Sitzes der Sitzreihe angeordnet ist. Die Gepäckablage kann sich in Richtung der Längsachse im Bereich einer Sitzreihe erstrecken, womit dann mehrere derartigen Gebäckablagen in Zuordnung jeweils zu einer Sitzreihe in Längsrichtung hintereinander angeordnet sind. Vorzugsweise erstreckt sich die Gepäckablage aber in Richtung der Längsachse über mehrere oder sämtliche Sitzreihen. Die Gepäckablage weist vorzugsweise eine Unterseite auf, die in Richtung der Sitzreihe (und damit in Richtung eines auf einem Sitz sitzenden Fahrgastes) weist.

Die Großraumfahrzeug-Fahrgastkabine verfügt darüber hinaus über ein Kabinenbelüftungssystem, wie dieses grundsätzlich aus dem Stand der Technik bekannt ist. Das Kabinenbelüftungssystem dient der Zufuhr von Frischluft, der Abfuhr von Luft aus der Kabine, einem Luftaustausch, einer Förderung der Luft in einem geschlossenen oder offenen Kreislauf, der Filterung der Luft, der Klimatisierung und/oder Temperierung der Luft in der Großraumfahrzeug-Fahrgastkabine, wie dieses grundsätzlich aus dem Stand der Technik bekannt ist.

Die Erfindung schlägt vor, dass im Bereich der Gepäckablage ein Luftfilterstrang angeordnet ist. Der Luftfilterstrang verfügt über (mindestens) eine Lufteintrittsöffnung, die auf der der zugeordneten Sitzreihe zugewandten Seite angeordnet ist. Der Luftfilterstrang verfügt über eine Fördereinrichtung für die Luft, über welche Luft über die (mindestens) eine Lufteintrittsöffnung angesaugt werden kann. Des Weiteren verfügt der Luftfilterstrang über (mindestens) eine Filtereinrichtung, über welche eine Filterung der über die Lufteintrittsöffnung von der Fördereinrichtung eingesaugten Luft erfolgt. Der Luftfilterstrang verfügt über eine Luftaustrittsöffnung, über die die derart gereinigte Luft von dem Luftfilterstrang wieder austritt. Erfindungsgemäß ist somit der Luftfilterstrang kein geschlossener (Ring-)Kreislauf. Vielmehr ist der Luftfilterstrang als beidseitig in Richtung eines Innenraums offener Luftfilterstrang ausgebildet, indem die Luft aus dem Innenraum über die (mindestens) eine Lufteintrittsöffnung in den Luftfilterstrang eintreten kann und dann nach der Reinigung über die (mindestens) eine Luftaustrittsöffnung wieder in den Innenraum austreten kann.

Der Erfindung liegt insbesondere die Erkenntnis zu Grunde, dass es nicht zwingend erforderlich ist, eine (ausschließliche) Reinigung der Luft in dem Kabinenbelüftungssystem vorzusehen, bei welchem üblicherweise eine Förderung der Luft zu einer zentralen Förder- und Filtereinheit erfolgt. Vielmehr kann mittels des Luftfilterstranges dezentral, nämlich jeweils an den Sitzreihen, eine Reinigung der Luft erfolgen. Auf diese Weise kann die Reinigung der Luft mit einem möglichst kleinen Abstand zu dem Entstehungsort von Verunreinigungen, nämlich dem Ort, an welchem von einem Fahrgast, der auf der Sitzreihe sitzt, Luft mit enthaltenen Aerosolen ausgeatmet wird, erfolgen. Die Leitungsstranglänge des Luftfilterstranges kann gegenüber der Leitungslänge eines zentralen Kabinenbelüftungssystems um mindestens eine Größenordnung reduziert werden, da im Idealfall sowohl die Lufteintrittsöffnung als auch die Luftaustrittsöffnung in unmittelbarer Umgebung der Gepäckablage angeordnet sind. Durch die erfindungsgemäße Anordnung der Lufteintrittsöffnung auf der der Sitzreihe zugewandten Seite, also unmittelbar benachbart dem Kopf eines in der Sitzreihe sitzenden Fahrgastes, kann unmittelbar das Aerosol der Atemluft abgesaugt werden, womit eine Verteilung des Aerosols in der Großraumfahrzeug-Fahrgastkabine zu einem benachbarten Sitz der Sitzreihe, zu einer benachbarten Sitzreihe und/oder in den Gang zwischen den Sitzreihen zumindest reduziert werden kann.

Im Rahmen der Erfindung ist möglich, dass im Bereich des Luftfilterstranges eine Aufteilung der Strömung der Luft erfolgt, indem ein Belüftungsluftstrom des Kabinenbelüftungssystems, der von einer Kabinenbelüftungs-Eintrittsöffnung des Kabinenbelüftungssystem in die Großraumfahrzeug-Fahrgastkabine zu einer Kabinenbelüftungs-Austrittsöffnung der Großraumfahrzeug-Fahrgastkabine strömt, aufgeteilt wird in einen Kabinenbelüftungsteilstrom, der unmittelbar von der Kabinenbelüftungs-Eintrittsöffnung zu der Kabinenbelüftungs-Austrittsöffnung strömt, sowie einen Kabinenbelüftungsteilstrom, der von der Kabinenbelüftungs-Eintrittsöffnung über den Luftfilterstrang zu der Kabinenbelüftungs-Austrittsöffnung strömt. Dieses Prinzip kann unabhängig davon Einsatz finden, wo die Kabinenbelüftungs-Eintrittsöffnung und Kabinenbelüftungs-Austrittsöffnung in der Großraumfahrzeug-Fahrgastkabine angeordnet sind. Beispielsweise kann somit der Kabinenbelüftungsstrom von einer im Bodenbereich der Großraumfahrzeug-Fahrgastkabine angeordneten Kabinenbelüftungs-Eintrittsöffnung zu einer im Deckenbereich angeordneten Kabinenbelüftungs-Austrittsöffnung vertikal nach oben orientiert sein oder bei Anordnung der Kabinenbelüftungs-Eintrittsöffnung im Deckenbereich und Anordnung der Kabinenbelüftungs-Austrittsöffnung im Bodenbereich vertikal nach unten orientiert sein. Für beide Ausführungsformen erfolgt in diesem Fall aber ein Einsaugen der Luft über die Lufteintrittsöffnung des Luftfilterstranges vertikal nach oben, um etwaige Aerosole von dem Fahrgast nach oben oberhalb des Kopfes abzusaugen.

Für eine erste Variante der Erfindung sind die Gepäckablage und eine den Luftfilterstrang aufweisende Luftfilterstrangeinrichtung separat voneinander ausgebildet, aber unmittelbar benachbart zueinander angeordnet, wobei dann die Luftfilterstrangeinrichtung an der Gepäckablage gehalten ist. Eine derartige Lösung kann beispielsweise vorteilhaft für eine Nachrüstung einer Großraumfahrzeug-Fahrgastkabine benutzt werden, bei der bereits eine Gepäckablage vorhanden ist. Für eine zweite Variante der Erfindung ist der Luftfilterstrang in die Gepäckablage integriert. In diesem Fall ist die mindestens eine Lufteintrittsöffnung im Bereich einer Unterseite der Gepäckablage angeordnet. Die Fördereinrichtung und die Filtereinrichtung sind in der Gepäckablage angeordnet. Die integrale Ausgestaltung des Luftfilterstranges mit der Gepäckablage führt für einige Ausführungsformen zu einer besonders kompakten Ausgestaltung, die Einschränkungen des Innenraums in vertikaler Richtung zwischen dem Kopf des Fahrgastes und der Gepäckablage einerseits und des Stauraums oberhalb der Gepäckablage reduziert. Andererseits führt diese Ausgestaltung möglicherweise zu einem ansprechenden Design.

Möglich ist, dass bereits bei der Erstausstattung der Großraumfahrzeug-Fahrgastkabine eine Gepäckablage mit integriertem Luftfilterstrang vorgesehen wird. Möglich ist aber auch, dass eine Nachrüstung einer Großraumfahrzeug-Fahrgastkabine erfolgt, indem eine vorhandene Gepäckablage, die beispielsweise an einem Befestigungsprofil im Bereich der Seitenwand der Großraumfahrzeug-Fahrgastkabine gehalten ist, demontiert wird und ausgetauscht wird gegen eine Gepäckablage mit integriertem Luftfilterstrang.

Vorzugsweise ist der Luftfilterstrang fluidisch autark ausgebildet, sodass der Luftfilterstrang fluidisch ausschließlich über die mindestens eine Lufteintrittsöffnung und die mindestens eine Luftaustrittsöffnung verfügt und hierüber mit dem Innenraum der Großraumfahrzeug-Fahrgastkabine kommuniziert. Hingegen sind keine fluidischen Verbindungsleitungen mit einem Kabinenbelüftungssystem oder mit von der Seitenwand zugeführten Leitungen vorhanden, was die Erstausstattung oder Nachrüstung einer Großraumfahrzeug-Fahrgastkabine vereinfacht.

Vorzugsweise erfolgt lediglich ein elektrischer Anschluss der Fördereinrichtung und/oder einer Steuereinrichtung und/oder ggf. einer elektronischen Bedieneinheit über eine elektrische Anschlussleitung, die beispielsweise in Längsrichtung der Großraumfahrzeug-Fahrgastkabine durch die oder entlang der Seitenwand verlaufen kann. Es kann auch ein entsprechender Anschluss über die Verbindung mit der Seitenwand an eine Datenleitung oder ein Bussystem erfolgen. Unter Umständen ist die elektrische Leistungsversorgung dabei neben dem Betrieb der Fördereinrichtung auch für weitere in die Gepäckablage integrierte elektrische Funktionen wie beispielsweise ein Leselicht zuständig.

Ein weiterer Aspekt der Erfindung widmet sich der Tatsache, dass die Gestaltung der Temperarturschichtung und der Strömungsverhältnisse in einer Großraumfahrzeug-Fahrgastkabine Gegenstand intensiver Optimierungen ist, um den Komfort der Fahrgäste zu erhöhen und Beeinträchtigungen der Fahrgäste infolge der sich ergebenden Strömungen und Temperaturschichtungen zu vermeiden. Ein besonderer Aspekt der Erfindung widmet sich der Gestaltung der Ausrichtung der Luftaustrittsöffnung(en) und/oder Formgebung und/oder Ausrichtung eines Strömungsleitelementes zur Vorgabe der Ausströmung der Luft aus der Luftaustrittsöffnung. Erfindungsgemäß sind diese Ausrichtungen konstruktiv derart so vorgegeben, dass (zumindest für einen ausgewählten spezifischen Betriebszustand des Kabinenbelüftungssystems und des Luftfilterstrangs) die Luft aus der Luftaustrittsöffnung mit einem Volumenstrom und/oder einer Strömungsrichtung austritt, die dem Volumenstrom und/oder der Strömungsrichtung entspricht, wenn keine Förderung der Luft durch den Luftfilterstrang erfolgt und lediglich das Kabinenbelüftungssystem Luft durch die Großraumfahrzeug-Fahrgastkabine fördert. Diese Ausgestaltung der Erfindung schlägt somit eine Integration des Luftfilterstrangs in die Großraumfahrzeug-Fahrgastkabine derart vor, dass die anhand von aufwendigen Optimierungen resultierende Luftströmung des Kabinenbelüftungssystems, die ohne Berücksichtigung eines Luftfilterstrangs erfolgt ist, möglichst wenig gestört oder verändert wird durch die Veränderung der Luftströmung durch Einsatz des Luftfilterstranges. Die Erfindung macht somit u. U. eine erneute Optimierung, nun unter Berücksichtigung des Luftfilterstranges, entbehrlich. Dieses Konzept für die Gestaltung der Ausrichtung der Luftaustrittsöffnung, die Gestaltung der Formgebung eines Strömungsleitelementes und die Vorgabe der Ausrichtung des Strömungsleitelementes kann vorteilhaft genutzt werden, wenn eine Nachrüstung einer Großraumfahrzeug-Fahrgastkabine mit einem Luftfilterstrang erfolgt, sodass der nachgerüstete Luftfilterstrang nicht zu einer unerwünschten Veränderung der Strömungsverhältnisse und der Temperaturschichtung führt. Möglich ist auch, dass diese konstruktiven Vorgaben verwendet werden, wenn eine Großraumfahrzeug-Fahrgastkabine herstellerseitig einerseits in einer ersten Produktvariante mit einem Luftfilterstrang und andererseits in einer zweiten Produktvariante ohne einen Luftfilterstrang angeboten werden soll. Schließlich ist diese konstruktive Gestaltung auch dann vorteilhaft, wenn dieselbe Großraumfahrzeug-Fahrgastkabine in unterschiedlichen Betriebssituationen einerseits mit einer Förderung von Luft durch den Luftfilterstrang und andererseits ohne Betrieb des Luftfilterstranges betrieben wird.

Bei dem ausgewählten spezifischen Betriebszustand, an welchen die konstruktive Anpassung der Ausrichtung der Luftaustrittsöffnung, der Formgebung des Strömungsleitelements und/oder der Ausrichtung des Strömungsleitelementes erfolgt, kann es sich beispielsweise um einen vorherrschenden Betriebszustand mit der höchsten Wahrscheinlichkeit oder mit der in einem normalen Betrieb längsten oder häufigsten Betriebsdauer handeln. Es kann sich bei dem ausgewählten spezifischen Betriebszustand aber auch um den Betriebszustand mit dem größten Volumenstrom durch den Luftfilterstrang handeln, da für diesen Betriebszustand die größte Beeinflussung durch das Kabinenbelüftungssystem bei ungeeigneter konstruktiver Auslegung erfolgen könnte.

Für eine konstruktive Auslegung, wie diese zuvor beschrieben worden ist, weist die Strömungsrichtung der aus der Luftaustrittsöffnung ausströmenden Luft in einer Projektion auf einen Querschnitt der Großraumfahrzeug-Fahrgastkabine einen Ausströmwinkel gegenüber der Unterseite (der Gepäckablage bei integraler Ausbildung mit dem Luftfilterstrang oder der Unterseite einer Luftfilterstrangeinrichtung) auf, deren Betrag (im Bereich oder benachbart der Austrittsöffnung) kleiner ist als 15°, insbesondere kleiner ist als 12°, kleiner ist als 10°, kleiner ist als 8° oder kleiner ist als 5°. Vorzugsweise ist dabei der Ausströmwinkel geringfügig gegenüber der Unterseite in Richtung der Decke abgewinkelt.

Dieser Ausgestaltung der Erfindung liegt insbesondere die Erkenntnis zugrunde, dass infolge der Strömungsverhältnisse, die durch das Kabinenbelüftungssystem verursacht werden oder durch die aufsteigende Luft infolge der Erwärmung der Luft durch den Fahrgast hervorgerufen werden, die Luft benachbart der Seitenwand vertikal nach oben strömt und durch die Unterseite zumindest mit einer Komponente in Querrichtung nach innen umgelenkt wird. Die Strömung folgt infolge dieser Umlenkung dann der Unterseite. In dem dem Gang zugewandten Endbereich der Unterseite tritt damit die Strömung parallel (oder zumindest mit einer Komponente parallel) zu der Unterseite aus und wird in Richtung der Decke abgelenkt, wo die Luft dann über eine Kabinenbelüftungs-Austrittsöffnung abgesaugt werden kann oder wieder umgelenkt wird und vertikal nach unten in den Gangbereich strömt, um im Bodenbereich von der Kabinenbelüftungs-Austrittsöffnung abgesaugt zu werden. Wird dann die Luft aus dem Luftfilterstrang parallel zur Unterseite oder mit einem geringfügigen Ausströmwinkel mit dem vorgenannten Betrag ausgeblasen, führt dies zu einer geringen Beeinträchtigung der Strömungsverhältnisse.

Ein weiterer Aspekt der Erfindung widmet sich der Tatsache, dass sich die Strömungsverhältnisse in der Großraumfahrzeug-Fahrgastkabine verändern, wenn sich eine Veränderung des Betriebszustandes des Kabinenbelüftungssystems ergibt. In diesem Fall kann für einen Vorschlag der Erfindung eine Steuer- oder Regeleinrichtung vorhanden sein, die den Betriebszustand des Luftfilterstranges an den Betriebszustand des Kabinenbelüftungssystems anpasst. Um lediglich ein die Erfindung nicht beschränkendes Beispiel zu nennen, kann bei einer Veränderung des Betriebszustandes des Kabinenbelüftungssystems derart, dass sich die Strömungsgeschwindigkeit der Luft im Bereich der Unterseite der Gepäckablage oder der Luftfilterstrangeinrichtung vergrößert, die Förderleistung der Fördereinrichtung des Luftfilterstranges erhöht werden, sodass ein Austritt der Luft aus dem Luftfilterstrang über die Luftaustrittsöffnung mit einer entsprechend angepassten Strömungsgeschwindigkeit erfolgt. Hierbei kann beispielsweise ein Kennfeld oder eine beliebige funktionale oder anderweitige Abhängigkeit zwischen dem Betriebszustand des Kabinenbelüftungssystems einerseits und dem Betriebszustand des Luftfilterstranges andererseits durch die Steuer- oder Regeleinrichtung für die Anpassung verwendet werden.

Möglich ist auch, dass eine Regelung erfolgt, indem die sich ergebenden Strömungsverhältnisse mittels eines Sensors erfasst werden und eine auf dem Signal des Sensors beruhende Regelung der Durchströmung des Luftfilterstranges erfolgt.

Für die Gestaltung der Filtereinrichtung gibt es im Rahmen der Erfindung vielfältige Möglichkeiten. So kann eine beliebige Anzahl und eine beliebige Ausgestaltung von Filtern in Reihenschaltung und/oder Parallelschaltung eingesetzt werden. Für einen Vorschlag der Erfindung weist die Filtereinrichtung einen beliebigen Filter der Klassifizierung EN1822-1: 2009 (insbesondere EPA, ULPA, HEPA) auf. Vorzugsweise handelt es sich um einen Filter der Klassifikation HEPA, wobei vorzugsweise ein derartiger Filter der Filterklasse H13 oder H14 Einsatz findet. Alternativ oder zusätzlich kann ein UV-C Filter in der Filtereinrichtung Einsatz finden. Ebenfalls möglich ist, dass in der Filtereinrichtung ein Mikrowellen-Filter und/oder ein Kaltplasma-Filter vorhanden ist.

Vorzugsweise verfügt der Luftfilterstrang über mehrere Lufteintrittsöffnungen, die mit beliebigen Geometrien und Integrationen beispielsweise in einem Gehäuse der Gepäckablage vorgesehen sein können. Möglich ist auch, dass ein derartiges Gehäuse ein poröses Material aufweist, welches dann mit den Poren die Lufteintrittsöffnungen bildet. Für einen besonderen Vorschlag der Erfindung sind die Lufteintrittsöffnungen von einer textilen Membran und/oder einer Lochplatte ausgebildet. Das Entsprechende kann auch für die Luftaustrittsöffnungen gelten.

Für einen Vorschlag der Erfindung verfügt die Großraumfahrzeug-Fahrgastkabine über Module. Die Module bilden dann eine Gepäckablage sowie mindestens einen Luftfilterstrang aus. Ein derartiges Modul kann dann einer einzelnen Sitzreihe oder mehreren Sitzreihen zugeordnet sein, wobei für jeweils eine Sitzreihe mindestens ein Luftfilterstrang in dem Modul vorgesehen sein kann. Sind dann eine größere Anzahl von Sitzreihen mit Modulen mit Gepäckablagen und Luftfiltersträngen auszustatten, können mehrere dieser Module in Längsrichtung hintereinander angeordnet sein, wobei die Module dann beabstandet voneinander angeordnet sein können oder in einem Modulstrang unmittelbar aneinander angrenzend angeordnet sein können oder miteinander montiert sein können und ineinander übergehen können.

Die modulare Gestaltung ermöglicht eine einfache Anpassung an unterschiedliche Sitzreihen und Großraumfahrzeug-Fahrgastkabinen mit einer unterschiedlichen Anzahl von Sitzreihen. Die Module können dann in einer großen Gleichzahl hergestellt werden, was zu einer Reduzierung der Kosten führen kann. Es kann aber auch eine Kombination unterschiedlicher Module miteinander erfolgen.

Hierbei kann die Längserstreckung der Module an den Abstand der Sitzreihen angepasst sein.

Die Erfindung schlägt auch vor, dass die Module im Bereich ihrer in Längsrichtung der Großraumfahrzeug-Fahrgastkabine weisenden Stirnseiten aneinander anliegen und aneinander befestigt sind. Es kann sich dann eine bündige und optisch ansprechende Unterseite der Module ergeben. Die Befestigung der Module aneinander kann zu einer Erhöhung der mechanischen Festigkeit führen, womit ein derartiger Modulstrang auch selbsttragend ausgebildet sein kann. Ein derartiger Modulstrang kann dann zusätzlich an einer Seitenwand, insbesondere im Bereich eines Befestigungsprofils, und/oder der Decke und/oder einer Stirn- oder Zwischenwand oder - abtrennung befestigt sein.

Bei einer derartigen stirnseitigen Befestigung der Module aneinander können/kann in die Stirnseite der Module mindestens ein Anschluss und/oder ein Gegenanschluss integriert sein, wobei es sich bspw. um einen elektrischen und/oder fluidischen Anschluss, einen Datenleitungsanschluss, einen Sensorleitungsanschluss und/oder einen Anschluss für ein Steuer- oder Regelsignal handeln kann. Erfolgt dann die Montage und Befestigung der Stirnseiten der Module aneinander, kann mit der Montagebewegung automatisch ein Anschluss eines ersten Moduls mit dem zugeordneten Gegenanschluss des hieran zu befestigenden zweiten Moduls verbunden werden. Beispielsweise kann der Anschluss einen Anschlussstutzen oder einen Stecker aufweisen, der dann unter fluidischer Abdichtung oder elektrischer Kontaktierung und Isolation nach außen Aufnahme findet in einem als Anschlusskanal oder -bohrung oder weibliche Steckeraufnahme ausgebildeten Gegenanschluss des benachbarten Moduls. Auf diese Weise kann sich eine elektrische Leitung und/oder eine fluidische Leitung über die Kopplung zwischen Anschluss und Gegenanschluss durch mindestens zwei Module erstrecken, wobei dann eine derartige durchgehende Leitung Zweigleitungen aufweisen kann, um beispielsweise eine elektrische Leistungsversorgung der einzelnen Fördereinrichtungen der Luftfilterstränge und/oder Steuer- oder Regelungseinrichtungen zu gewährleisten.

Möglich ist, dass mindestens ein Modul mit einer Leitung an einer Seitenwand der Großraumfahrzeug-Fahrgastkabine verbunden ist, wobei es sich bei der Leitung um eine fluidische und/oder elektrische Leitung handeln kann. Über die Leitung kann dann beispielsweise von der Seitenwand eine elektrische Leistungsversorgung des Moduls oder Modulstrangs und/oder die Zuführung eines Steuer-, Regel- oder Sensorsignals erfolgen. Möglich ist, dass sämtliche Module jeweils mit einer Leitung in der Seitenwand der Großraumfahrzeug-Fahrgastkabine verbunden sind. Möglich ist aber auch, dass lediglich ein oder mehrere Module mit einer Leitung in der Seitenwand verbunden ist/sind, während andere Module dann über eine über den Anschluss und den Gegenanschluss miteinander verbundene Leitung zwischen den Modulen mit der Leitung in der Seitenwand verbunden sind.

Für einen Vorschlag der Erfindung verfügt die Großraumfahrzeug-Fahrgastkabine über ein Niederspannungsnetz, bei dem es sich beispielsweise um ein 30-V-Niederspannungsnetz handeln kann. In diesem Fall ist möglich, dass die Fördereinrichtung des Luftfilterstrangs, insbesondere über die Leitung zwischen den Modulen oder über eine Verbindung mit einer Leitung in der Seitenwand, mit dem Niederspannungsnetz verbunden ist, womit dann eine elektrische Leistungsversorgung der Fördereinrichtung gewährleistet ist.

Für einen weiteren Vorschlag der Erfindung verfügt die Großraumfahrzeug-Fahrgastkabine über einen Sitzreihenbelegungssensor, anhand dessen erfasst wird, ob eine Sitzreihe und ggf. wie viele und/oder welche Sitze der Sitzreihe mit einem Fahrgast belegt sind. Ein derartiger Sitzreihenbelegungssensor kann beispielsweise in die Sitzfläche des Sitzes integriert sein und die Belastung der Sitzfläche mit dem Gewicht des Fahrgastes erfassen. Möglich ist auch, dass der Sitzreihenbelegungssensor ein optischer Sensor ist, der optisch die Belegung des Sitzes oder der Sitzreihe erfasst. Die Belegung des Sitzes oder der Sitzreihe kann alternativ auch mittels eines beliebigen anderen Sensors, insbesondere eines Wärme- oder Infratotsensors, der die veränderte Temperierung der Sitzreihe bei einem auf einem Sitz angeordneten Fahrgast erfasst, erfasst werden. Die Belegung eines Sitzes oder der Sitzreihe kann einmalig für eine Fahrt des Großraumfahrzeugs erfasst werden, indem vergebene Sitze von nicht vergebenen Sitzen unterschieden werden. Mittels des Sitzreihenbelegungssensors kann aber auch erfasst werden, wenn temporär ein Sitz von einem Fahrgast verlassen wird. Erfindungsgemäß ist dann eine Steuer- oder Regelungseinrichtung vorhanden (bei der es sich auch um die Steuer- oder Regelungseinrichtung handeln kann, die den Betriebszustand des Luftfilterstranges an den Betriebszustand des Kabinenbelüftungssystems anpasst). Die Steuer- oder Regelungseinrichtung passt den Betriebszustand des Luftfilterstrangs an den von dem Sitzreihenbelegungssensor erfassten Sitzreihenbelegungszustand an. Um lediglich ein einfaches Beispiel zu nennen, kann die Regelungseinrichtung eine On-Off-Regelung derart vornehmen, dass die Fördereinrichtung des Luftfilterstranges betrieben wird, wenn der Sitzreihenbelegungszustand ist, dass der unter dem Luftfilterstrang angeordnete Sitz belegt ist, während ansonsten der Luftfilterstrang deaktiviert wird oder mit einer verringerten Förderleistung betrieben wird.

Für einen alternativen oder kumulativen Vorschlag der Erfindung ist ein Atmungszustandssensor vorhanden. Der Atmungszustandssensor kann beispielsweise die Atemluft eines Fahrgastes erfassen und die Atemluft derart analysieren, dass erkannt wird, in welchem Ausmaß Aerosole in der ausgeatmeten Luft enthalten sind. Für ein anderes Beispiel ist der Atmungszustandssensor ein Akustiksensor, mit dem gemessen wird, ob ein Fahrgast hustet oder niest. Um lediglich ein weiteres, die Erfindung nicht beschränkendes Beispiel zu nennen, kann der Atmungszustandssensor eine Körpertemperatur des Fahrgastes erfassen. Ergibt sich eine erhöhte Körpertemperatur des Fahrgastes, kann darauf geschlossen werden, dass eine hohe Wahrscheinlichkeit dafür besteht, dass die von dem Fahrgast ausgeatmete Luft Aerosole mit Viren beinhaltet. Erfindungsgemäß erfolgt dann eine Anpassung des Betriebszustands des Luftfilterstrangs an den von dem Atmungszustandssensor erfassten Atmungszustand. Hustet beispielsweise der Fahrgast, kann eine Erhöhung der Förderleistung der Fördereinrichtung des Luftfilterstranges erfolgen, sodass eine Absaugung und Reinigung der beim Husten austretenden Aerosole erfolgt.

Für einen Vorschlag der Erfindung verfügt der Luftfilterstrang über eine auswechselbare Filterkartusche. Die auswechselbare Filterkartusche kann dann turnusgemäß ausgetauscht werden, wenn in der Filterkartusche eine bestimmungsgemäße Menge von Aerosolen, Partikeln und Viren gesammelt worden sind oder eine vorbestimmte Betriebsdauer überschritten worden ist. In diesem Fall kann die Gepäckablage die Luftfilterstrangeinrichtung oder das Modul eine Wartungsklappe aufweisen, über die die Filterkartusche austauschbar ist.

Möglich ist auch, dass in der Filtereinrichtung ein Reservoir vorhanden ist, in welchem aus der Luft herausgefilterte Partikel oder Aerosole bevorratet werden können. Ist das Reservoir gefüllt oder eine vorbestimmte Betriebsdauer erreicht, kann ein Austausch einer Filterkartusche, in der das Reservoir vorgesehen ist, erfolgen. Möglich ist aber auch, dass turnusgemäß ein Reinigungsbetrieb des Reservoirs erfolgt, indem beispielsweise von einem Personal turnusgemäß eine Entleerung des Reservoirs erfolgt. Möglich ist des Weiteren, dass der Luftfilterstrang in einem Reinigungsbetrieb betrieben wird, indem gezielt eine Entleerung des Reservoirs erfolgt. Dieser Reinigungsbetrieb kann turnusgemäß oder dann durchgeführt werden, wenn sich kein Fahrgast in der Großraumfahrzeug-Fahrgastkabine befindet oder in dem Sitz oder der Sitzreihe unter dem Luftfilterstrang kein Fahrgast befindet. Möglich ist dann beispielsweise, dass über die Öffnung einer zusätzlichen Austrittsöffnung und/oder die Umschaltung eines Ventils gezielt ein Strom von Luft mittels der Fördereinrichtung durch das Reservoir zu einer Austrittsöffnung herbeigeführt wird, der dann die Entleerung des Reservoirs über die Austrittsöffnung herbeiführt.

Alternativ oder kumulativ möglich ist, dass eine Behandlungseinrichtung vorhanden ist, über welche eine Behandlung der durch den Luftfilterstrang strömenden Luft und/oder der von der Filtereinrichtung herausgefilterten Partikel erfolgt. Möglich ist beispielsweise, dass die Behandlungseinrichtung Partikel verbrennt oder Mikroorganismen oder Viren abtötet. Die Behandlungseinrichtung kann bspw. als UV-C-Lampe, als kaltes Plasma oder Heizeinrichtung ausgebildet sein. Ist eine Behandlung der durch den Luftfilterstrang strömenden Luft mit einer vorbestimmten größeren Behandlungsdauer erforderlich, kann unter Umständen auch eine Behandlung der Luft im Bereich eines spiral- oder labyrinthartigen Kanales erfolgen.

Ebenfalls möglich ist, dass eine Bedieneinrichtung vorhanden ist, über die ein Fahrgast den Betrieb des Luftfilterstranges beeinflussen kann. Diese Beeinflussung kann in einer Veränderung der Förderleistung der Fördereinrichtung, der Aktivierung des Luftfilterstrangs sowie Deaktivierung desselben, der Initiierung eines Reinigungs- und/oder Behandlungsbetriebs u. ä. bestehen. Hierbei kann die Bedieneinrichtung als Schalter oder Regler ausgebildet sein, wobei dieser Schalter im Bereich einer Rückenlehne vor dem Fahrgast, im Bereich des Sitzes, auf dem der Fahrgast sitzt, an dem Modul, der Gepäckablage und/oder der Luftfilterstrangeinrichtung angeordnet sein. Ebenfalls möglich ist, dass die Bedieneinrichtung als zentrale Bedieneinrichtung ausgebildet ist, über die der Fahrgast oder ein Betreiber wie ein Steward oder eine Stewardess eines Luftfahrzeugs den Betrieb der Luftfilterstränge für einzelne Fahrgäste, Sitzreihen oder Sitze spezifisch oder gemeinsam für alle Fahrgäste oder Sitze oder Sitzreihen steuern kann.

Möglich ist auch, dass in den Luftfilterstrang eine Temperiereinrichtung integriert ist, über welche (zusätzlich zu einer Temperiereinrichtung des Kabinenbelüftungssystems) eine Temperierung der Großraumfahrzeug-Fahrgastkabine erfolgen kann. Hierbei kann die Temperierung in einer Erwärmung und/oder Abkühlung bestehen. Möglich ist in diesem Fall auch, dass die Fördereinrichtung umschaltbar ist zwischen einem Filtermodus, in dem wie zuvor erläutert Luft durch den Luftfilterstrang von der Lufteintrittsöffnung über die Filtereinrichtung zu der Luftaustrittsöffnung strömt, und einem Temperiermodus, in dem die Luft in umgekehrter Richtung von der Luftaustrittsöffnung über die Temperiereinrichtung (und über die Filtereinrichtung oder unter Umgehung der Filtereinrichtung) zu der Lufteintrittsöffnung strömt und über die LufteintrittsÖffnung in die Raumfahrzeug-Fahrgastkabine strömt, was vorzugsweise benachbart dem Kopf des auf dem Sitz sitzenden Fahrgastes erfolgt.

Vorteilhafte Weiterbildungen der Erfindung ergeben sich aus der Beschreibung und den Zeichnungen im Rahmen des Schutzbereichs, der durch die Ansprüche festgelegt wird.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 5**: zeigen schematisch exemplarische Querschnitte durch Großraumfahrzeug-Fahrgastkabinen mit aus dem Stand der Technik bekannten Konzepten für Kabinenbelüftungssysteme.
- **Fig. 6**: zeigt einen Querschnitt einer erfindungsgemäßen Großraumfahrzeug-Fahrgastkabine in einem Detail im Bereich einer Gepäckablage mit einem Luftfilterstrang.
- **Fig. 7**: zeigt schematisch einen Querschnitt durch eine erfindungsgemäße Großraumfahrzeug-Fahrgast- kabine mit der Gepäckablage und dem Luftfilterstrang gemäß Fig. 6.
- **Fig. 8**: zeigt schematisch einen Querschnitt durch eine gattungsgemäße Großraumfahrzeug-Fahrgast- kabine in einem Detail im Bereich einer Gepäckablage mit einem Luftfilterstrang.
- **Fig. 9**: zeigt schematisch einen Querschnitt einer gattungsgemäßen Großraumfahrzeug-Fahrgastkabine mit der Gepäckablage und dem Luftfilterstrang gemäß Fig. 8.
- **Fig. 10**: zeigt schematisch einen in eine Gepäckablage integrierten Luftfilterstrang.

### FIGURENBESCHREIBUNG

Für Bauelemente oder Merkmale, die sich entsprechen oder ähneln, werden im Folgenden teilweise dieselben Bezugsnummern verwendet, wobei diese dann durch einen zusätzlichen Buchstaben a, b voneinander unterschieden sein können. In diesem Fall kann auf die Bauelemente oder Merkmale auch ohne den ergänzenden Buchstaben Bezug genommen werden, womit dann ein derartiges Bauelement oder Merkmal, mehrere derartige Bauelemente oder Merkmale oder sämtliche derartige Bauelemente oder Merkmale gemeint sein können.

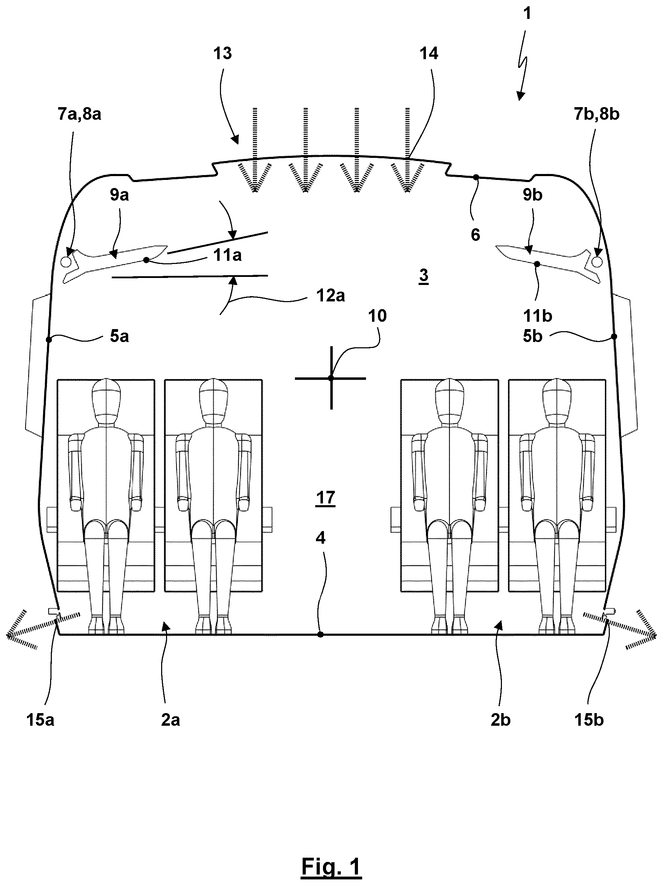

**Fig. 1** zeigt eine Großraumfahrzeug-Fahrgastkabine 1 in einem Querschnitt mit einer in Fahrtrichtung des Großraumfahrzeugs und in Richtung einer Längsachse 10 rechten Sitzreihe 2a und einer linken Sitzreihe 2b. Die Großraumfahrzeug-Fahrgastkabine 1 verfügt über einen Innenraum 3, der durch einen Boden 4, Seitenwände 5a, 5b und eine Decke 6 begrenzt ist. An den Seitenwänden 5a, 5b sind oberhalb der Sitzreihen 2a, 2b, aber mit Abstand zur Decke 6, Konsolen 7a, 7b angeordnet, die über Befestigungsprofile 8a, 8b verfügen. Die Konsolen 7a, 7b erstecken sich in Richtung der Längsachse 10 der Großraumfahrzeug-Fahrgastkabine 1 (also vertikal zur Zeichenebene gemäß Fig. 1) über mehrere Sitzreihen 2a, 2b oder entlang der gesamten Großraumfahrzeug-Fahrgastkabine 1.

An den Befestigungsprofilen 8a, 8b sind Gepäckablagen 9a, 9b befestigt.

Die Gepäckablage 9a, 9b verfügt über eine Unterseite 11a, 11b, die ausgehend von der Seitenwand 5a, 5b oder dem Befestigungsprofil 8a, 8b eine Orientierung mit einer horizontalen Komponente nach innen sowie einer vertikalen Komponente nach oben aufweist. Vorzugsweise ist die Unterseite 11a, 11b gegenüber der Horizontalen unter einem Winkel 12a leicht nach oben geneigt, wobei der Winkel 12a vorzugsweise im Bereich von 0° bis 30°, 5° bis 25°, 8° bis 20° liegt. Hierbei kann der Winkel 12a ein mittlerer Winkel der Unterseite 11a, 11b im Querschnitt oder ein Winkel eines Hauptabschnitts der Unterseite 11a, 11b in dem Querschnitt oder ein mittlerer Winkel der Unterseite 11a, 11b in diesem Querschnitt sein.

Fig. 1 zeigt ein Kabinenbelüftungssystem 13, wie dieses beispielsweise im ICE 1 oder ICE 2 Einsatz findet. Das Kabinenbelüftungssystem 13 verfügt über mindestens eine Kabinenbelüftungs-Eintrittsöffnung 14, die mittig im Bereich der Decke 6 angeordnet ist, sowie über Kabinenbelüftungs-Austrittsöffnungen 15a, 15b, die in den Übergangsbereichen von dem Boden 4 zu den Seitenwänden 5a, 5b angeordnet sind. In dem Kabinenbelüftungssystem 13 gelangt Frischluft von der Kabinenbelüftungs-Eintrittsöffnung 14 in den Innenraum 3, während die Luft nach der Durchströmung des Innenraumes 3 über die Kabinenbelüftungs-Austrittsöffnungen 15a, 15b wieder aus dem Innenraum 3 abgeführt oder "abgesaugt" wird.

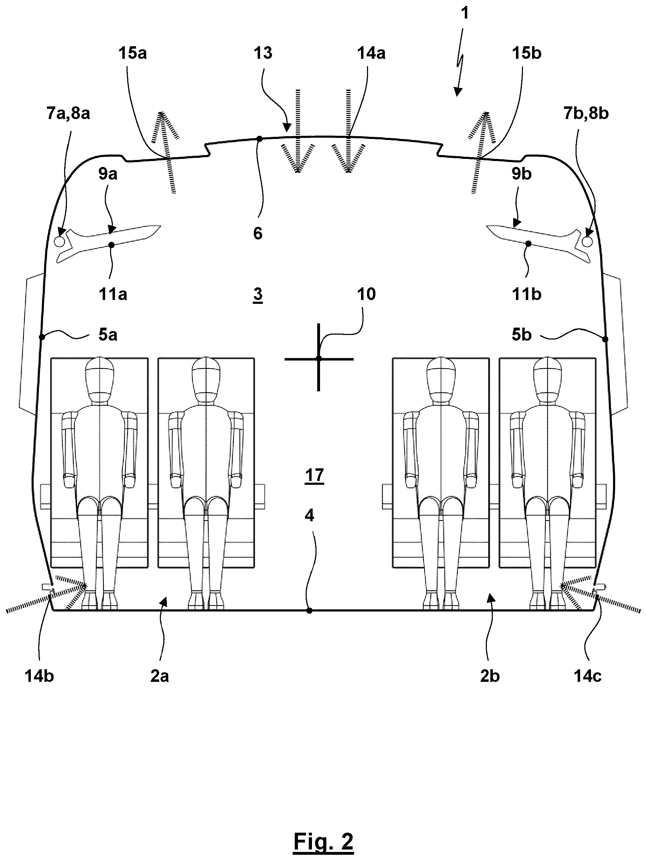

**Fig. 2** zeigt eine entsprechende Großraumfahrzeug-Fahrgastkabine 1 mit einem Kabinenbelüftungssystem 13, wie dieses in einem ICE 3 oder ICE 4 Einsatz findet. In diesem Fall sind Kabinenbelüftungs-Eintrittsöffnungen 14a ebenfalls mittig im Bereich der Decke 6 angeordnet. Allerdings sind für dieses Kabinenbelüftungssystem 13 weitere Kabinenbelüftungs-Eintrittsöffnungen 14b, 14c im Übergangsbereich von dem Boden 4 zu den Seitenwänden 5a, 5b angeordnet. Die Kabinenbelüftungs-Austrittsöffnungen 15a, 15b sind hier im Bereich der Decke 6, nämlich auf beiden Seiten von den Kabinenbelüftungs-Eintrittsöffnungen 14a, angeordnet.

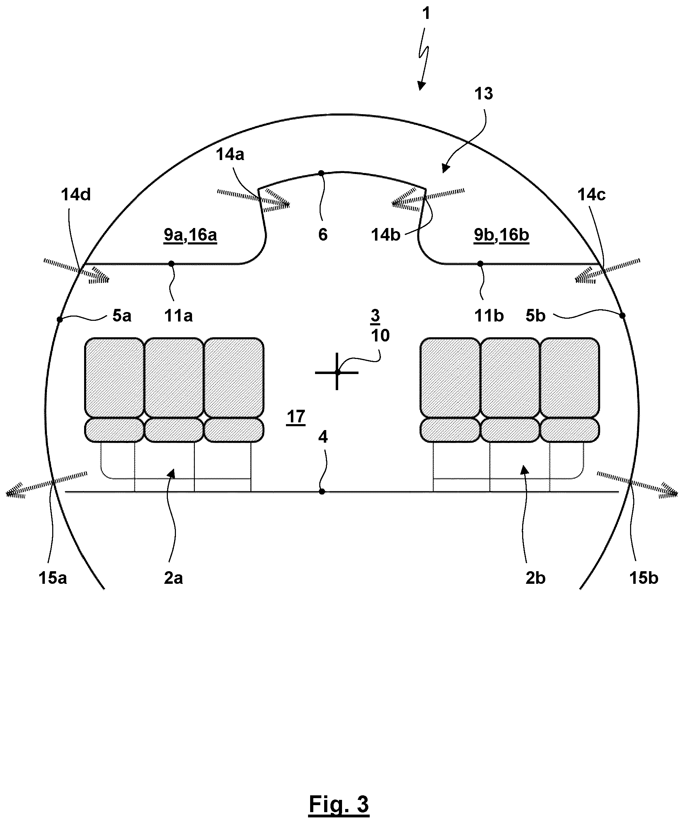

**Fig. 3** zeigt schematisch ein Kabinenbelüftungssystem 13, wie dieses beispielsweise für eine Großraumfahrzeug-Fahrgastkabine 1 in dem Flugzeug A 320 Einsatz findet. Hier sind die Gepäckablagen 9a, 9b als Kofferfächer 16a, 16b ausgebildet, die mittels einer Schwenkklappe geöffnet und geschlossen werden können. Hier gehen die Kofferfächer 16a, 16b über einen vertikal nach oben orientierten Absatz über in die Decke 6. Für diese Ausführungsform des Kabinenbelüftungssystems 13 sind die Kabinenbelüftungs-Eintrittsöffnungen 14a, 14b im Übergangsbereich von den Kofferfächern 16a, 16b zu der Decke 6 angeordnet. Weitere Kabinenbelüftungs-Eintrittsöffnungen 14c, 14d sind im Übergangsbereich der Kofferfächer 16a, 16b zu den Seitenwänden 5a, 5b angeordnet. Die Kabinenbelüftungs-Austrittsöffnungen 15a, 15b sind im Übergangsbereich von dem Boden 4 zu den Seitenwänden 5a, 5b angeordnet.

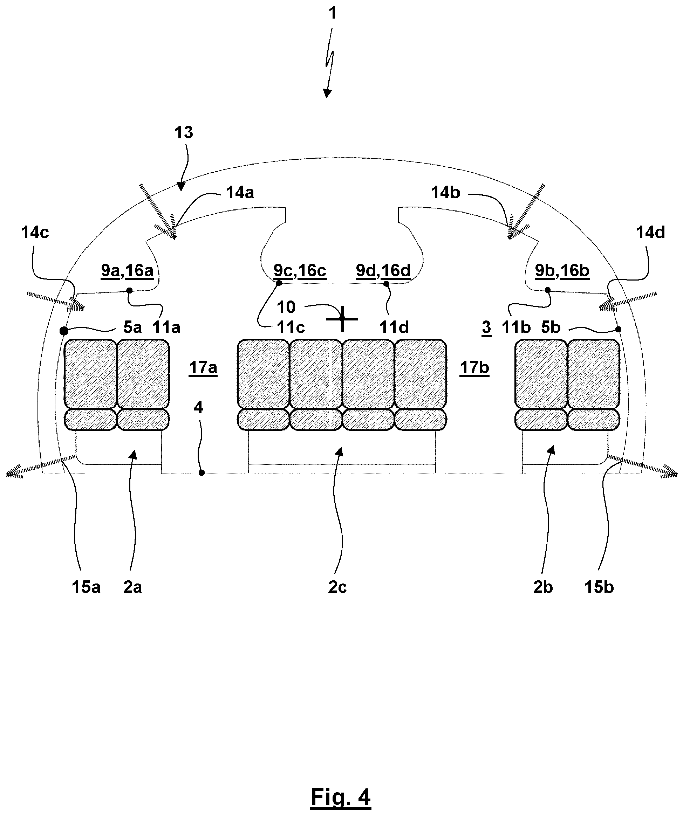

In den Großraumfahrzeug-Fahrgastkabinen 1 gemäß Fig. 1 bis 3 waren die Sitzreihen 2a, 2b in einer sogenannten "single-aisle"-Anordnung, also unter Ausbildung eines einzigen Ganges 17 zwischen einer rechten und linken Sitzreihe 2a, 2b, angeordnet. Fig. 4 zeigt eine Großraumfahrzeug-Fahrgastkabine 1, bei der eine linke Sitzreihe 2a, eine rechte Sitzreihe 2b und eine mittlere Sitzreihe 2c vorhanden sind. Es handelt sich hierbei um eine sogenannte "twin-aisle"-Anordnung, bei welcher zwischen den Sitzreihen 2a, 2b, 2c zwei Gänge 17a, 17b ausgebildet werden. Für diese Anordnung verfügt die Großraumfahrzeug-Fahrgastkabine 1 über Gepäckablagen 9a, 9b in Ausgestaltung als Kofferfächer 16a, 16b, die über den Sitzreihen 2a, 2b angeordnet und an der zugeordneten Seitenwand 5a, 5b befestigt sind, sowie über mittige Gepäckablagen 9c, 9d in Ausgestaltung als Kofferfächer 16c, 16d, die an der Decke 6 gehalten sind. Für diese Ausgestaltung bilden die Kofferfächer 16a, 16c; 16d, 16b oberhalb der Gänge 17a, 17b vertikale Absätze zu den Decken, womit sich hier eine Art Längskanal ergibt.

Fig. 4 zeigt ein Kabinenbelüftungssystem 13, wie dieses in dem Flugzeug A 340 Einsatz findet. Die Kabinenbelüftungs-Eintrittsöffnungen 14a, 14b 14c, 14d sind im Bereich der genannten Längskanäle, also zwischen den von den Kofferfächern 16a, 16c; 16d, 16b oberhalb der Gänge 17a, 17b gebildeten Absätzen im Bereich der Decke 6 sowie im Übergangsbereich von den Kofferfächern 16a, 6b zu den Seitenwänden 5a, 5b angeordnet, während die Kabinenbelüftungs-Austrittsöffnungen 15a, 15b im Übergangsbereich von dem Boden 4 zu den Seitenwänden 5a, 5b angeordnet sind.

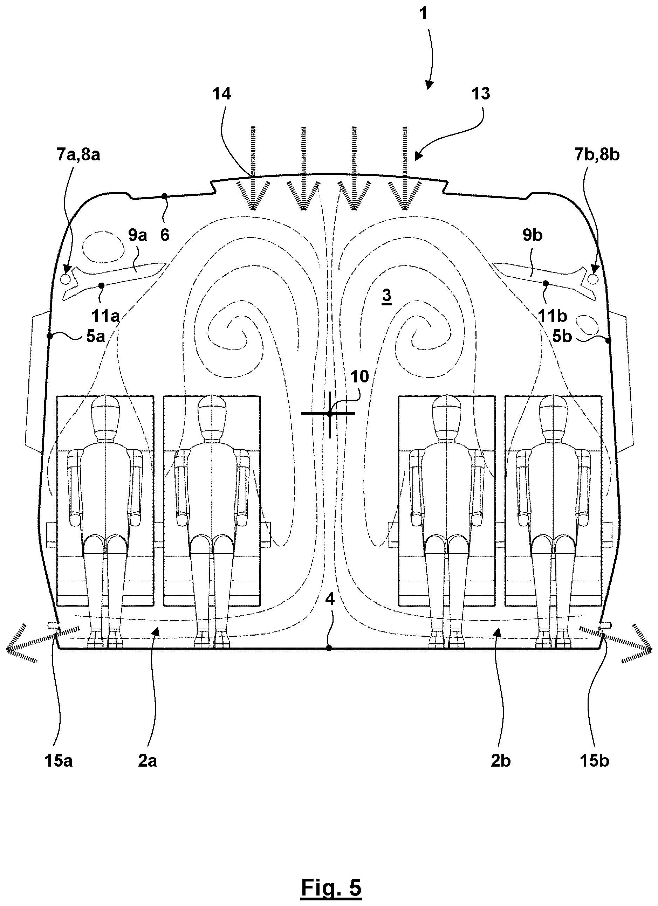

**Fig. 5** zeigt ein Kabinenbelüftungssystem 13 gemäß Fig. 1, wobei hier ergänzend die Strömungsverhältnisse dargestellt sind, die sich infolge der Erwärmung der Luft in dem Innenraum 3 infolge der auf den Sitzreihen 2a, 2b sitzenden Passagiere ergibt. Infolge der Erwärmung der Luft durch die Passagiere steigt diese im Bereich der Passagiere vertikal nach oben auf und trifft auf die Unterseiten 11 der Gepäckablagen 9a, 9b, wo die Luft dann mit einer Strömungskomponente horizontal nach innen umgelenkt wird, sodass die Luft dann die innenliegenden Stirnseiten der Gepäckablagen 9a, 9b passieren kann. Mit weiterer Annährung an die Decke 6 erfolgt dann die Umlenkung der Luft und die Vereinigung derselben mit der Frischluft, die über die Kabinenbelüftungs-Eintrittsöffnung 14 in den Innenraum 3 strömt. Zu erkennen sind hier auch sich im Bereich der am Gang 17 sitzenden Passagiere bildende Luftwirbel.

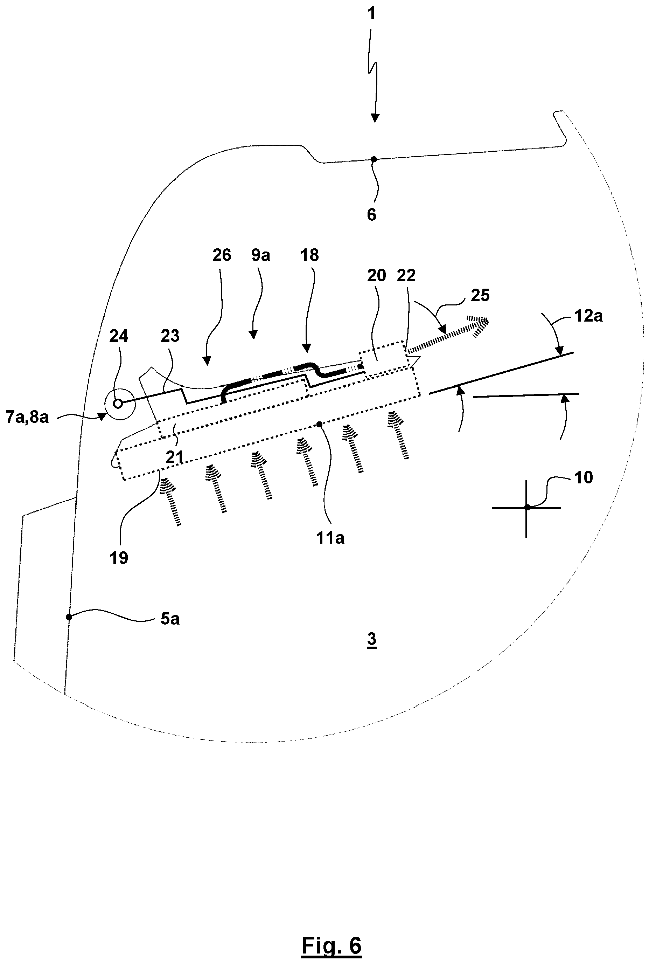

Gemäß **Fig. 6** ist in die Gepäckablage 9a ein Luftfilterstrang 18 integriert. Der Luftfilterstrang 18 verfügt über
- Lufteintrittsöffnungen 19, die im Bereich der Unterseite 11a der Gepäckablage 9a angeordnet sind,
- eine Filtereinrichtung 20,
- einer Fördereinrichtung 21 und
- Luftaustrittsöffnungen 22,
die in dieser Reihenfolge von der Luft durchströmt werden. Eine elektrische Leistungsversorgung und Steuerung oder Regelung des Luftfilterstranges 18 oder der Fördereinrichtung 21 erfolgt über eine Zweigleitung 23, bei der es sich um einen beliebigen Leitungsstrang und/oder ein Bussystem handeln kann. Die Zweigleitung 23 zweigt von einer Zentralleitung 24 ab, die sich in Richtung der Längsachse 10 und entlang der Seitenwand 5a oder der Konsole 7a, des Befestigungsprofils 8a oder der Gepäckablage 9a erstreckt oder in diese integriert sein kann.

Die Luftaustrittsöffnungen 22 sind derart orientiert, dass sich ein Ausströmwinkel 25 der Luft aus den Lufteintrittsöffnungen 22 gegenüber der Unterseite 11a ergibt, der kleiner ist als 15°.

Der Luftfilterstrang 18 kann (vorzugsweise gemeinsam mit der Gepäckablage 9) ein Modul 26 bilden, wobei mehrere derartige Module 26 dann in Zuordnung zu den Sitzreihen 2a, 2b in Richtung der Längsachse 10 hintereinanderliegend mit oder ohne Abstand voneinander angeordnet sein können. In diesem Fall kann einen Zentralleitung 24 auch in Längsrichtung durch die Module 26 verlaufen.

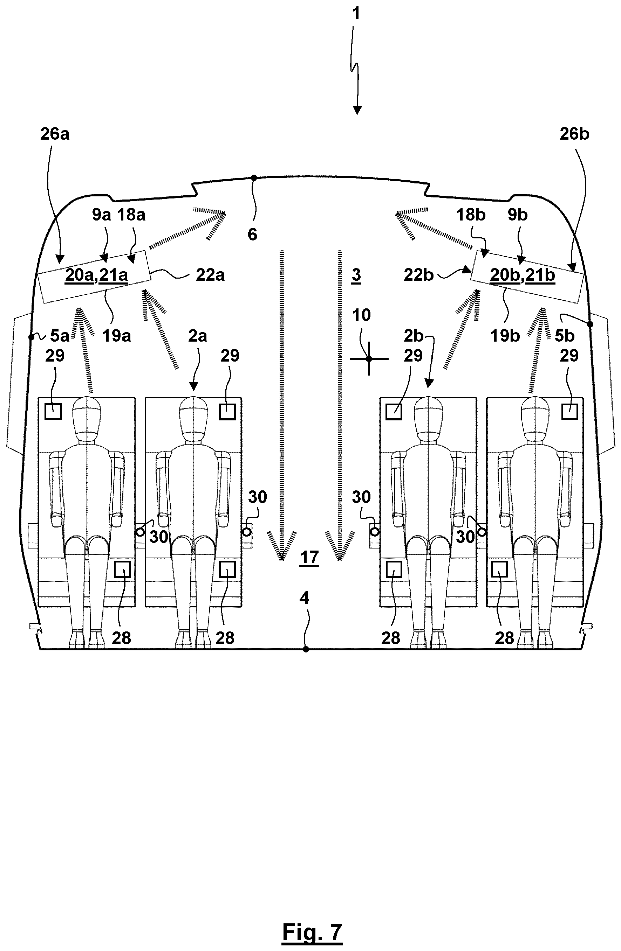

**Fig. 7** zeigt die sich bei Einsatz des Luftfilterstrangs 18 gemäß Fig. 6 ergebenden Strömungsverhältnisse. Möglich ist dabei der Einsatz und Betrieb des Luftfilterstrangs 18a, 18b, ohne dass ein Betrieb des Kabinenbelüftungssystems 13 erfolgt. Vorzugsweise werden das Kabinenbelüftungssystem 13 und der Luftfilterstrang 18a, 18b gleichzeitig betrieben.

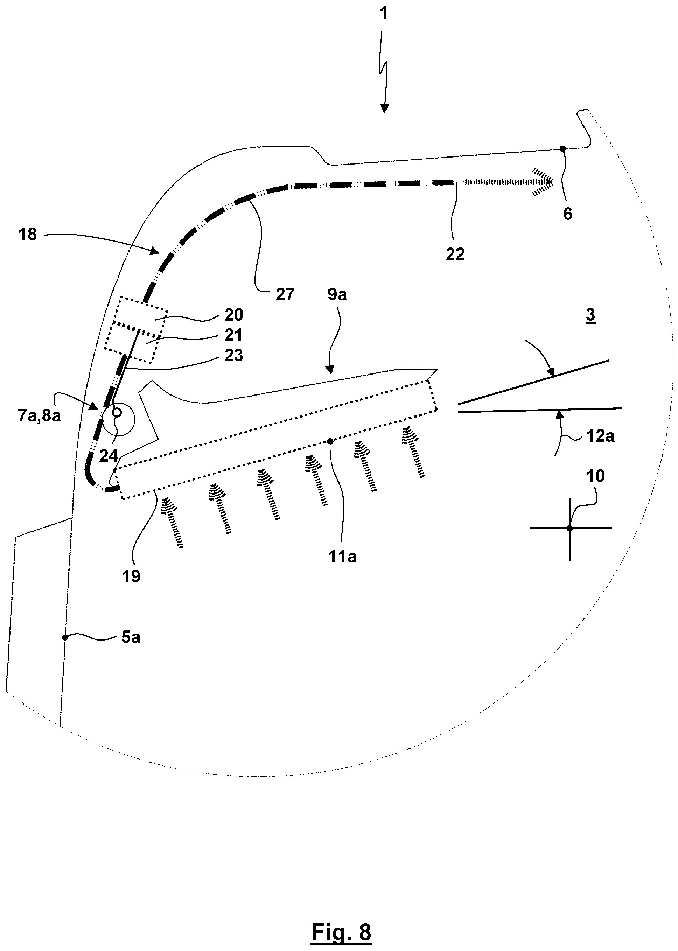

**Fig. 8** zeigt eine alternative Ausgestaltung einer gattungsgemäßen Großraumfahrzeug-Fahrgastkabine 1, bei welcher in die Gepäckablage 9a ausschließlich die Lufteintrittsöffnungen 19 integriert sind. Die Lufteintrittsöffnungen 19 sind dabei mit einem Strömungskanal 27 verbunden, der sich durch die Gepäckablage 9a und entlang der Seitenwand 5a zu der Decke 6 und entlang der Decke 6 bis in den Bereich oberhalb des Gangs erstreckt. Der Strömungskanal 27 bildet dann die mindestens eine Luftaustrittsöffnung 22. In den Strömungskanal 27 sind in diesem Fall die Filtereinrichtung 20 und die Fördereinrichtung 21 integriert.

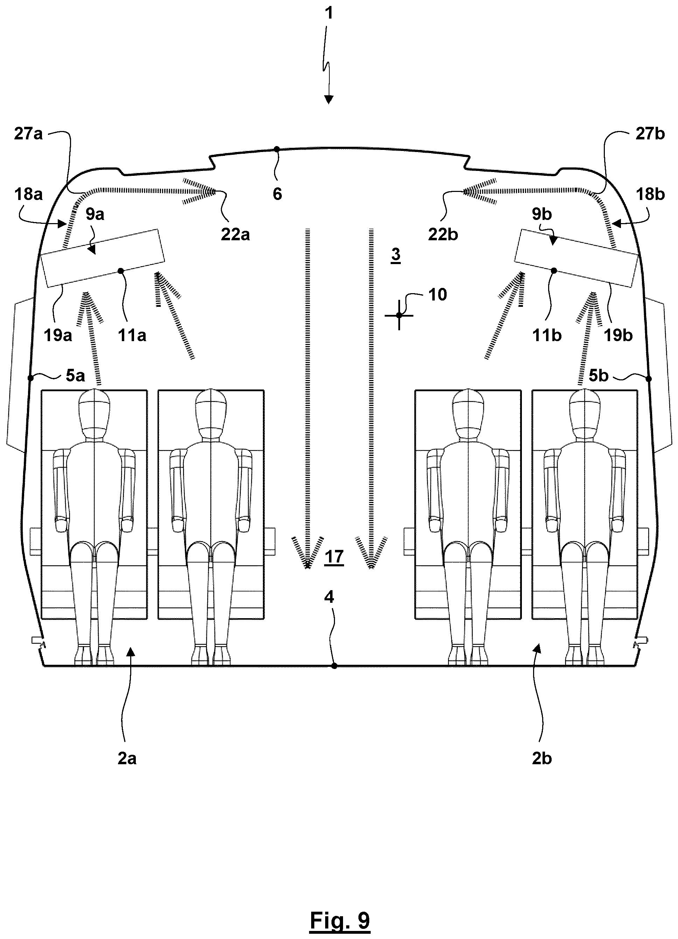

**Fig. 9** zeigt die sich infolge dieser Ausgestaltung des Luftfilterstranges 18a, 18b ergebende Strömungsverhältnisse im Innenraum 3 der Großraumfahrzeug-Fahrgastkabine 1. Auch hier kann der Luftfilterstrang 18a, 18b ohne Betrieb des Kabinenbelüftungssystems 13 betrieben werden, wobei vorzugsweise das Kabinenbelüftungssystem 13 und der Luftfilterstrang 18a, 18b gleichzeitig betrieben werden.

Optional können Sitze der Sitzreihen 2a, 2b mit Sitzreihenbelegungssensoren 28 ausgestattet sein. Alternativ oder kumulativ können den Sitzen der Sitzreihen 2a, 2b Atmungszustandssensoren 29 zugeordnet sein. Alternativ oder kumulativ möglich ist, dass den Sitzen der Sitzreihe 2a, 2b Bedieneinrichtungen 30 zugeordnet sind, über welche der Passagier den Betrieb des Luftfilterstrangs 18a, 18b beeinflussen, steuern oder regeln kann, beispielsweise hinsichtlich der Förderleistung, der Filterleistung und/oder einer Temperierleistung.

Sind jeweils auf einer Seite der Großraumfahrzeug-Fahrgastkabine 1 gebildete Modulstränge mit den Modulen 26 elektrisch miteinander gekoppelt, ist auf jeder Seite des Innenraums 3 lediglich ein Anschluss an einer Bord-Stromversorgung, insbesondere in einem Endbereich des Modulstranges erforderlich. Möglich ist, dass in einem Endbereich des Modulstrangs ein Anschluss an die Bord-Stromversorgung mit den unterschiedlichen Polen erfolgt, während in dem anderen Endbereich je nach Ausführung (Rein- oder Parallelschaltung) dann ein Abschlussstück zum Schließen des Stromkreises zum Einsatz kommen kann.

Die Module 26 können über einen festen Rahmen, beispielsweise aus Aluminium verfügen, welcher dann an einer passenden Halterung der Konsolen 7a, 7b, Befestigungsprofile 8a, 8b, der Seitenwand 5a, 5b oder Decke 6 befestigt werden kann.

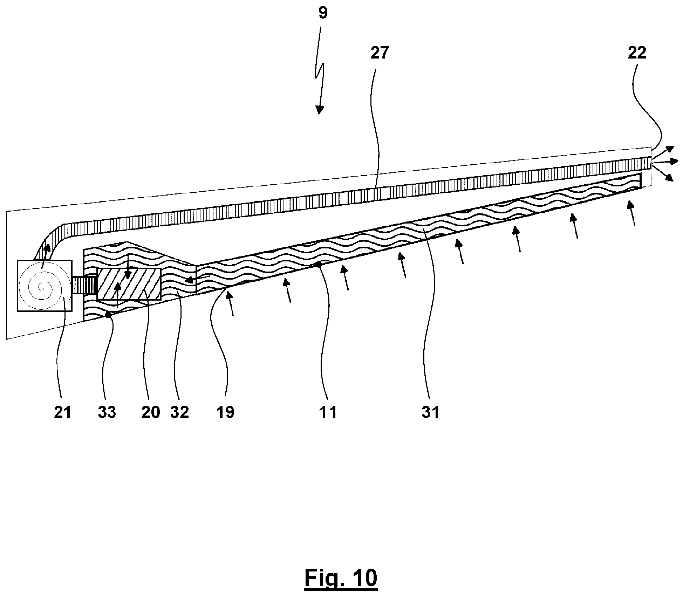

**Fig. 10** zeigt eine weitere Ausgestaltung eines vollständig in eine Gepäckablage 9 integrierten Luftfilterstrangs 18. Hier gelangt die Luft von dem in die Unterseite 11 der Gepäckablage 9 integrierten Lufteintrittsöffnungen 19 in eine Sammelkammer 31, die zu einer Luftfilterkammer 32 führt. Die Luft strömt in der Luftfilterkammer 32 durch die Filtereinrichtung 20 und von dort über die Fördereinrichtung 21 und einen Strömungskanal 27, der hier innerhalb der Gepäckablage 9 verläuft, zu der mindestens einen Luftaustrittsöffnung 22, von der die Luft wieder in den Innenraum der Großraumfahrzeug-Fahrgastkabine 1 gelangt. In Richtung der Seitenwand sind dabei die Sammelkammer 31, die Luftfilterkammer 32 mit der Filtereinrichtung 20 und die Fördereinrichtung 21 in dieser Reihenfolge angeordnet. Die Sammelkammer 31 schließt dabei unmittelbar an die der Seitenwand abgewandte Stirnseite der Gepäckablage 9 an und erstreckt sich über mindestens 50 %, mindestens 60 %, mindestens 70 % oder sogar mindestens 80 % der Unterseite 11 in dem dargestellten Querschnitt. Die Luftfilterkammer 32 und damit die darin angeordnete Filtereinrichtung 20 kann über eine Wartungsklappe 33 zugänglich sein, wozu die Wartungsklappe 33 herausnehmbar oder aufklappbar sein kann. Vorzugsweise schließt die Wartungsklappe 33 auf der der Seitenwand zugewandten Seite unmittelbar oder mit einem Abstand an die Sammelkammer 31 an.

### BEZUGSZEICHENLISTE

- 1: Großraumfahrzeug-Fahrgastkabine
- 2a, 2b: Sitzreihe
- 3: Innenraum
- 4: Boden
- 5a, 5b: Seitenwand
- 6: Decke
- 7a, 7b: Konsole
- 8a, 8b: Befestigungsprofile
- 9: Gepäckablage
- 10: Längsachse
- 11: Unterseite
- 12a, 12b: Winkel
- 13: Kabinenbelüftungssystem
- 14: Kabinenbelüftungs-Eintrittsöffnung
- 15a, 15b: Kabinenbelüftungs-Austrittsöffnung
- 16a, 16b: Kofferfach
- 17: Gang
- 18: Luftfilterstrang
- 19: Lufteintrittsöffnung
- 20: Filtereinrichtung
- 21: Fördereinrichtung
- 22: Luftaustrittsöffnung
- 23: Zweigleitung
- 24: Zentralleitung
- 25: Ausströmwinkel
- 26: Modul
- 27: Strömungskanal
- 28: Sitzreihenbelegungssensor
- 29: Atmungszustandssensor
- 30: Bedieneinrichtung
- 31: Sammelkammer
- 32: Luftfilterkammer
- 33: Wartungsklappe

## Patentansprüche

1. Großraumfahrzeug-Fahrgastkabine (1) mit
a) mehreren Sitzreihen (2a, 2b), die
aa) in Richtung einer Längsachse (10) hintereinander angeordnet sind und
ab) sich jeweils quer zu der Längsachse (10) erstrecken, und
b) einer Gepäckablage (9a; 9b), die
ba) an einer Seitenwand (5a; 5b) und/oder an einer Decke (6) gehalten ist,
bb) in vertikaler Richtung zwischen der Decke (6) und den Sitzreihen (2a, 2b) angeordnet ist und
bc) sich in Richtung der Längsachse (10) über eine oder mehrere Sitzreihen (2a, 2b) erstreckt,
c) einem Kabinenbelüftungssystem (13) und
d) einem Luftfilterstrang (18a; 18b), der
da) auf der einer Sitzreihe (2a, 2b) zugewandten Seite eine Lufteintrittsöffnung (19a; 19b) aufweist,
db) eine Fördereinrichtung (21a; 21b) aufweist,
dc) eine Filtereinrichtung (20a; 20b) aufweist, wobei vorzugsweise die Filtereinrichtung (20a; 20b) einen HEPA-Filter und/oder einen UV-C-Filter und/oder einen Mikrowellen-Filter und/oder einen Kaltplasma-Filter aufweist, und
dd) eine in einen Innenraum (3) der Großraumfahrzeug-Fahrgastkabine (1) mündende Luftaustrittsöffnung (22a; 22b) aufweist,
so dass der Luftfilterstrang (18a; 18b) als beidseitig in Richtung des Innenraums (3) offener Luftfilterstrang (18a; 18b) ausgebildet ist,
**dadurch gekennzeichnet, dass**
e) der Luftfilterstrang (18a; 18b) im Bereich der Gepäckablage (9a; 9b) angeordnet ist und
fa) die Gepäckablage (9a; 9b) und eine den Luftfilterstrang (18a; 18b) aufweisende Luftfilterstrangeinrichtung separat voneinander ausgebildet, aber unmittelbar benachbart zueinander angeordnet sind, wobei die Luftfilterstrangeinrichtung an der Gepäckablage (9a; 9b) gehalten ist, oder
fb) der Luftfilterstrang (18a; 18b) in die Gepäckablage (9a; 9b) integriert ist, die Lufteintrittsöffnung (19a; 19b) im Bereich einer Unterseite (11a; 11b) der Gepäckablage (9a; 9b) angeordnet ist und die Fördereinrichtung (21a; 21b) und die Filtereinrichtung (20a; 20b) in der Gepäckablage (9a; 9b) angeordnet sind.

2. Großraumfahrzeug-Fahrgastkabine (1) nach Anspruch 1, **wobei** eine Ausrichtung der Luftaustrittsöffnung (22a; 22b) und/oder Formgebung und/oder Ausrichtung eines Strömungsleitelementes zur Vorgabe der Ausströmung der Luft aus der Luftaustrittsöffnung (22a; 22b)
a) so konstruktiv vorgegeben sind/ist, dass zumindest für einen ausgewählten spezifischen Betriebszustand des Kabinenbelüftungssystems (13) und des Luftfilterstrangs (18a; 18b) die Luft aus der Luftaustrittsöffnung (22a; 22b) mit einem korrespondierenden Volumenstrom und/oder einer korrespondierenden Strömungsrichtung austritt wie eine Umströmung der Luftaustrittsöffnung (22a; 22b) erfolgt, wenn keine Förderung von Luft durch den Luftfilterstrang (18a; 18b) erfolgt, und/oder
b) derart erfolgt, dass die Strömungsrichtung der aus der Luftaustrittöffnung (22a; 22b) ausströmenden Luft in einer Projektion auf einen Querschnitt der Großraumfahrzeug-Fahrgastkabine (1) einen Ausströmwinkel (25) gegenüber der Unterseite (11a; 11b) aufweist, deren Betrag kleiner als 15° ist.

3. Großraumfahrzeug-Fahrgastkabine (1) nach einem der vorhergehenden Ansprüche, **wobei** eine Steuer- oder Regelungseinrichtung vorhanden ist, die den Betriebszustand des Luftfilterstranges (18a; 18b) an den Betriebszustand des Kabinenbelüftungssystems (13) anpasst.

4. Großraumfahrzeug-Fahrgastkabine (1) nach einem der vorhergehenden Ansprüche, **wobei** Lufteintrittsöffnungen (19a; 19b) von einer textilen Membran oder einer Lochplatte ausgebildet sind.

5. Großraumfahrzeug-Fahrgastkabine (1) nach einem der vorhergehenden Ansprüche, **wobei** mehrere Module (26a; 26b) vorhanden sind, die jeweils eine Gepäckablage (9a; 9b) und mindestens einen Luftfilterstrang (18a; 18b) aufweisen, wobei vorzugsweise die Längserstreckung der Module (26a; 26b) an den Abstand der Sitzreihen (2a; 2b) angepasst ist.

6. Großraumfahrzeug-Fahrgastkabine (1) nach Anspruch 5, **wobei** die Module (26a; 26b) im Bereich der Stirnseiten aneinander befestigt sind, wobei vorzugsweise in die Stirnseiten mindestens ein Anschluss integriert ist und eine Verbindung von Anschlüssen automatisch mit der Montage der Stirnseiten der Module (26a; 26b) miteinander herbeiführbar ist.

7. Großraumfahrzeug-Fahrgastkabine (1) nach Anspruch 5 oder 6, **wobei** ein Modul (26a; 26b) mit einer Leitung in einer Seitenwand (5a; 5b) der Großraumfahrzeug-Fahrgastkabine (1) verbunden ist.

8. Großraumfahrzeug-Fahrgastkabine (1) nach einem der vorhergehenden Ansprüche, **wobei** die Fördereinrichtung (21a; 21b) des Luftfilterstrangs (18a; 18b) oder das Modul (26a; 26b) mit einem Niederspannungsnetz der Großraumfahrzeug-Fahrgastkabine (1) verbunden ist.

9. Großraumfahrzeug-Fahrgastkabine (1) nach einem der vorhergehenden Ansprüche, **wobei**
a) ein Sitzreihenbelegungssensor (28) vorhanden ist und eine Steuer- oder Regelungseinrichtung den Betriebszustand des Luftfilterstrangs (18a; 18b) an einen von dem Sitzreihenbelegungssensor (28) erfassten Sitzreihenbelegungszustand anpasst und/oder
b) ein Atmungszustandssensor (29) vorhanden ist und eine Steuer- oder Regelungseinrichtung den Betriebszustand des Luftfilterstrangs (18a; 18b) an einen von dem Atmungszustandssensor (29) erfassten Atmungszustand anpasst.

10. Großraumfahrzeug-Fahrgastkabine (1) nach einem der vorhergehenden Ansprüche, **wobei** der Luftfilterstrang (18a; 18b) eine auswechselbare Filterkartusche aufweist, wobei vorzugsweise eine Wartungsklappe (33) vorhanden ist, über die die Filterkartusche austauschbar ist.

11. Großraumfahrzeug-Fahrgastkabine (1) nach einem der vorhergehenden Ansprüche, **wobei** ein Reservoir für aus der Luft von der Filtereinrichtung (20a; 20b) herausgefilterte Partikel vorhanden ist.

12. Großraumfahrzeug-Fahrgastkabine (1) nach einem der vorhergehenden Ansprüche, **wobei** eine Behandlungseinrichtung für die durch den Luftfilterstrang (18a; 18b) strömende Luft und/oder für die aus der Luft von der Filtereinrichtung (20a; 20b) herausgefilterten Partikel vorhanden ist.

13. Großraumfahrzeug-Fahrgastkabine (1) nach einem der vorhergehenden Ansprüche, **wobei** eine Bedieneinrichtung (30) vorhanden ist, über die ein Fahrgast den Betrieb des Luftfilterstrangs (18a; 18b) beeinflussen kann.

14. Großraumfahrzeug-Fahrgastkabine (1) nach einem der vorhergehenden Ansprüche, **wobei** der Luftfilterstrang (18a; 18b) eine Temperiereinrichtung aufweist.

## Claims

1. Large-capacity vehicle passenger cabin (1) comprising
a) a plurality of seat rows (2a, 2b), which
aa) are arranged one behind another in the direction of a longitudinal axis (10) and
ab) each extend transversely to the longitudinal axis (10), and
b) a luggage rack (9a; 9b), which
ba) is held on a side wall (5a; 5b) and/or on a ceiling (6),
bb) is arranged in the vertical direction between the ceiling (6) and the seat rows (2a, 2b), and
bc) extends in the direction of the longitudinal axis (10) over one or more seat rows (2a, 2b),
c) a cabin ventilation system (13), and
d) an air filter duct (18a; 18b)
da) having, on the side facing a seat row (2a, 2b), an air inlet opening (19a; 19b),
db) having a conveying device (21a; 21b),
dc) having a filter device (20a; 20b), wherein preferably the filter device (20a; 20b) has a HEPA filter and/or a UV-C filter and/or a microwave filter and/or a cold plasma filter, and
dd) having an air outlet opening (22a; 22b) opening into an interior space (3) of the large-capacity vehicle passenger cabin (1),
so that the air filter duct (18a; 18b) is configured as an air filter duct (18a; 18b) open on both sides towards the interior space (3),
**characterized in that**
e) the air filter duct (18a; 18b) is arranged in the region of the luggage rack (9a; 9b), and
fa) the luggage rack (9a; 9b) and an air filter duct arrangement comprising the air filter duct (18a; 18b) are configured separately from one another but arranged directly adjacent to one another, wherein the air filter duct arrangement is held on the luggage rack (9a; 9b), or
fb) the air filter duct (18a; 18b) is integrated into the luggage rack (9a; 9b), the air inlet opening (19a; 19b) is arranged in the region of an underside (11a; 11b) of the luggage rack (9a; 9b), and the conveying device (21a; 21b) and the filter device (20a; 20b) are arranged in the luggage rack (9a; 9b).

2. Large-capacity vehicle passenger cabin (1) according to claim 1, wherein an orientation of the air outlet opening (22a; 22b) and/or shaping and/or orientation of a flow guide element for defining the outflow of the air from the air outlet opening (22a; 22b)
a) are/is structurally defined such that, at least for a selected specific operating state of the cabin ventilation system (13) and of the air filter duct (18a; 18b), the air exits from the air outlet opening (22a; 22b) with a corresponding volume flow and/or a corresponding flow direction as an airflow around the air outlet opening (22a; 22b) occurs when no conveyance of air through the air filter duct (18a; 18b) takes place, and/or
b) is chosen such that the flow direction of the air flowing out from the air outlet opening (22a; 22b) in a projection onto a cross section of the large-capacity vehicle passenger cabin (1) has an outflow angle (25) relative to the underside (11a; 11b), the magnitude of which is less than 15°.

3. Large-capacity vehicle passenger cabin (1) according to one of the preceding claims, wherein a control device (open loop control or closed loop control) is present which adapts the operating state of the air filter duct (18a; 18b) to the operating state of the cabin ventilation system (13).

4. Large-capacity vehicle passenger cabin (1) according to one of the preceding claims, wherein air inlet openings (19a; 19b) are formed by a textile membrane or a perforated plate.

5. Large-capacity vehicle passenger cabin (1) according to one of the preceding claims, wherein a plurality of modules (26a; 26b) are present, each having a luggage rack (9a; 9b) and at least one air filter duct (18a; 18b), wherein preferably the longitudinal extension of the modules (26a; 26b) is adapted to the spacing of the seat rows (2a; 2b).

6. Large-capacity vehicle passenger cabin (1) according to claim 5, wherein the modules (26a; 26b) are fastened to one another in the region of the end faces, wherein preferably at least one connection is integrated into the end faces and a connection of connections can automatically be brought about with the assembly of the end faces of the modules (26a; 26b) to one another.

7. Large-capacity vehicle passenger cabin (1) according to claim 5 or 6, wherein a module (26a; 26b) is connected to a line in a side wall (5a; 5b) of the large-capacity vehicle passenger cabin (1).

8. Large-capacity vehicle passenger cabin (1) according to one of the preceding claims, wherein the conveying device (21a; 21b) of the air filter duct (18a; 18b) or the module (26a; 26b) is connected to a low-voltage network of the large-capacity vehicle passenger cabin (1).

9. Large-capacity vehicle passenger cabin (1) according to one of the preceding claims, wherein
a) a seat row occupancy sensor (28) is present and a control device (open loop control or closed loop control) adapts the operating state of the air filter duct (18a; 18b) to a seat row occupancy state detected by the seat row occupancy sensor (28), and/or
b) a breathing state sensor (29) is present and a control device (open loop control or closed loop control) adapts the operating state of the air filter duct (18a; 18b) to a breathing state detected by the breathing state sensor (29).

10. Large-capacity vehicle passenger cabin (1) according to one of the preceding claims, wherein the air filter duct (18a; 18b) comprises a replaceable filter cartridge, wherein preferably a maintenance flap (33) is present via which the filter cartridge can be replaced.

11. Large-capacity vehicle passenger cabin (1) according to one of the preceding claims, wherein a reservoir is present for particles filtered out of the air by the filter device (20a; 20b).

12. Large-capacity vehicle passenger cabin (1) according to one of the preceding claims, wherein a treatment device is present for the air flowing through the air filter duct (18a; 18b) and/or for the particles filtered out of the air by the filter device (20a; 20b).

13. Large-capacity vehicle passenger cabin (1) according to one of the preceding claims, wherein an operating device (30) is present via which a passenger can influence the operation of the air filter duct (18a; 18b).

14. Large-capacity vehicle passenger cabin (1) according to one of the preceding claims, wherein the air filter duct (18a; 18b) comprises a tempering device.

## Revendications

1. Cabine de passagers de véhicule de grande capacité (1) comportant
a) plusieurs rangées de sièges (2a, 2b), qui
aa) sont disposées l'une derrière l'autre dans la direction d'un axe longitudinal (10) et
ab) s'étendent chacune transversalement à l'axe longitudinal (10), et
b) un compartiment à bagages (9a; 9b), qui
ba) est maintenu sur une paroi latérale (5a; 5b) et/ou sur un plafond (6),
bb) est disposé en direction verticale entre le plafond (6) et les rangées de sièges (2a, 2b), et
bc) s'étend dans la direction de l'axe longitudinal (10) sur une ou plusieurs rangées de sièges (2a, 2b),
c) un système de ventilation de cabine (13), et
d) une chaîne de filtration d'air (18a; 18b), qui
da) comporte un orifice d'entrée d'air (19a; 19b) sur le côté faisant face à une rangée de sièges (2a, 2b),
db) comporte un dispositif de transport (21a; 21b),
dc) comporte un dispositif de filtration (20a; 20b), le dispositif de filtration (20a; 20b) comportant de préférence un filtre HEPA et/ou un filtre UV-C et/ou un filtre à micro-ondes et/ou un filtre à plasma froid, et
dd) comporte un orifice de sortie d'air (22a; 22b) débouchant dans un espace intérieur (3) de la cabine de passagers de véhicule de grande capacité (1),
de sorte que la chaîne de filtration d'air (18a; 18b) est formée comme une chaîne de filtration d'air (18a; 18b) ouverte des deux côtés en direction de l'espace intérieur (3),
**caractérisé en ce que**
e) la chaîne de filtration d'air (18a; 18b) est disposée dans la zone du compartiment à bagages (9a; 9b) et
fa) le compartiment à bagages (9a; 9b) et un dispositif de chaîne de filtration d'air comportant la chaîne de filtration d'air (18a; 18b) sont formés séparément l'un de l'autre, mais sont disposés immédiatement adjacents l'un à l'autre, le dispositif de chaîne de filtration d'air étant maintenu sur le compartiment à bagages (9a; 9b), ou
fb) la chaîne de filtration d'air (18a; 18b) est intégrée dans le compartiment à bagages (9a; 9b), l'orifice d'entrée d'air (19a; 19b) étant disposé dans la zone d'une face inférieure (11a; 11b) du compartiment à bagages (9a; 9b) et le dispositif de transport (21a; 21b) et le dispositif de filtration (20a; 20b) sont disposés dans le compartiment à bagages (9a; 9b).

2. Cabine de passagers de véhicule de grande capacité (1) selon la revendication 1, dans laquelle une orientation de l'orifice de sortie d'air (22a; 22b) et/ou une configuration et/ou une orientation d'un élément de guidage d'écoulement pour la détermination de l'écoulement de l'air à partir de l'orifice de sortie d'air (22a; 22b)
a) sont/est spécifiées de manière constructive de sorte qu'au moins pour un état de fonctionnement spécifique sélectionné du système de ventilation de cabine (13) et de la chaîne de filtration d'air (18a; 18b), l'air sort de l'orifice de sortie d'air (22a; 22b) avec un débit volumique correspondant et/ou une direction d'écoulement correspondante, comme un écoulement d'enveloppement de l'orifice de sortie d'air (22a; 22b) se produit lorsqu'aucun transport d'air par la chaîne de filtration d'air (18a; 18b) n'a lieu, et/ou
b) se produit de telle sorte que la direction d'écoulement de l'air s'écoulant de l'orifice de sortie d'air (22a; 22b) dans une projection sur une section transversale de la cabine de passagers de véhicule de grande capacité (1) présente un angle d'écoulement (25) par rapport à la face inférieure (11a; 11b), dont la valeur est inférieure à 15^∘.

3. Cabine de passagers de véhicule de grande capacité (1) selon l'une des revendications précédentes, dans laquelle un dispositif de commande ou de régulation est présent, qui adapte l'état de fonctionnement de la chaîne de filtration d'air (18a; 18b) à l'état de fonctionnement du système de ventilation de cabine (13).

4. Cabine de passagers de véhicule de grande capacité (1) selon l'une des revendications précédentes, dans laquelle les orifices d'entrée d'air (19a; 19b) sont formés à partir d'une membrane textile ou d'une plaque perforée.

5. Cabine de passagers de véhicule de grande capacité (1) selon l'une des revendications précédentes, dans laquelle plusieurs modules (26a; 26b) sont présents, chacun comportant un compartiment à bagages (9a; 9b) et au moins une chaîne de filtration d'air (18a; 18b), la longueur d'extension des modules (26a; 26b) étant de préférence adaptée à l'espacement des rangées de sièges (2a; 2b).

6. Cabine de passagers de véhicule de grande capacité (1) selon la revendication 5, dans laquelle les modules (26a; 26b) sont fixés l'un à l'autre dans la zone des faces d'extrémité, au moins un raccord étant de préférence intégré dans les faces d'extrémité et une connexion des raccords pouvant être réalisée automatiquement lors du montage des faces d'extrémité des modules (26a; 26b).

7. Cabine de passagers de véhicule de grande capacité (1) selon la revendication 5 ou 6, dans laquelle un module (26a; 26b) est relié à une conduite dans une paroi latérale (5a; 5b) de la cabine de passagers de véhicule de grande capacité (1).

8. Cabine de passagers de véhicule de grande capacité (1) selon l'une des revendications précédentes, dans laquelle le dispositif de transport (21a; 21b) de la chaîne de filtration d'air (18a; 18b) ou le module (26a; 26b) est relié à un réseau basse tension de la cabine de passagers de véhicule de grande capacité (1).

9. Cabine de passagers de véhicule de grande capacité (1) selon l'une des revendications précédentes, dans laquelle
a) un capteur d'occupation de rangée de sièges (28) est présent et un dispositif de commande ou de régulation adapte l'état de fonctionnement de la chaîne de filtration d'air (18a; 18b) à un état d'occupation de rangée de sièges détecté par le capteur d'occupation de rangée de sièges (28) et/ou
b) un capteur d'état respiratoire (29) est présent et un dispositif de commande ou de régulation adapte l'état de fonctionnement de la chaîne de filtration d'air (18a; 18b) à un état respiratoire détecté par le capteur d'état respiratoire (29).

10. Cabine de passagers de véhicule de grande capacité (1) selon l'une des revendications précédentes, dans laquelle la chaîne de filtration d'air (18a; 18b) comporte une cartouche de filtre remplaçable, une trappe de maintenance (33) étant de préférence présente, par laquelle la cartouche de filtre est échangeable.

11. Cabine de passagers de véhicule de grande capacité (1) selon l'une des revendications précédentes, dans laquelle un réservoir pour des particules filtrées de l'air par le dispositif de filtration (20a; 20b) est présent.

12. Cabine de passagers de véhicule de grande capacité (1) selon l'une des revendications précédentes, dans laquelle un dispositif de traitement pour l'air s'écoulant à travers la chaîne de filtration d'air (18a; 18b) et/ou pour les particules filtrées de l'air par le dispositif de filtration (20a; 20b) est présent.

13. Cabine de passagers de véhicule de grande capacité (1) selon l'une des revendications précédentes, dans laquelle un dispositif de commande (30) est présent, par lequel un passager peut influencer le fonctionnement de la chaîne de filtration d'air (18a; 18b).

14. Cabine de passagers de véhicule de grande capacité (1) selon l'une des revendications précédentes, dans laquelle la chaîne de filtration d'air (18a; 18b) comporte un dispositif de régulation de température.
